(19) Europäisches Patentamt
European Patent Office
Office européen des brevets

(11) **EP 3 209 473 B1**

(12) **FASCICULE DE BREVET EUROPEEN**

(45) Date de publication et mention
de la délivrance du brevet:
**03.03.2021 Bulletin 2021/09**

(21) Numéro de dépôt: **15785102.3**

(22) Date de dépôt: **26.10.2015**

(51) Int Cl.:
***B29B 15/12*** *(2006.01)*      *B29K 307/04* *(2006.01)*

(86) Numéro de dépôt international:
**PCT/EP2015/074734**

(87) Numéro de publication internationale:
**WO 2016/062896 (28.04.2016 Gazette 2016/17)**

(54) **MÈCHES POUDRÉES PAR PROCÉDÉ ÉLECTROSTATIQUE**

DURCH ELEKTROSTATISCHES VERFAHREN PULVERBESCHICHTETE LITZEN

STRANDS POWDERED BY ELECTROSTATIC METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.10.2014 FR 1460259**

(43) Date de publication de la demande:
**30.08.2017 Bulletin 2017/35**

(73) Titulaire: **Porcher Industries
38300 Badinières (FR)**

(72) Inventeurs:
• **PELLET, Romain
71390 Saint-Désert (FR)**
• **MERLE, Grégory
38110 Cessieu (FR)**

(74) Mandataire: **Lavoix
62, rue de Bonnel
69448 Lyon Cedex 03 (FR)**

(56) Documents cités:
DE-A1-102006 057 603     FR-A1- 2 939 069
JP-A- H09 136 976     JP-A- 2004 090 352
US-A1- 2008 020 193

## EP 3 209 473 B1

**Description**

La présente invention concerne le domaine technique des composites à renfort continu à matrice organique thermoplastique. Elle concerne plus particulièrement les semi-produits utilisés dans la fabrication de matériaux composites par placement de fibre automatisé (AFP : Automated Fibre Placement) ou par enroulement filamentaire, pultrusion, tressage, imprimante 3D. Ces composites sont destinés aux procédés « indirect », ce qui signifie que toute la matrice organique du composite final se trouve déjà sur le semi-produit. Une fois la dépose du ruban effectuée sur le support un obtient une préforme qui contient un certain pourcentage de porosité en fonction des paramètres de dépose. Enfin, en fonction du taux de porosité visé dans la pièce finale et de la qualité de la préforme, l'étape de consolidation de la pièce est réalisée en autoclave ou en étuve.

Dans les domaines aéronautique, pétrolier ou automobile il devient impératif d'automatiser les procédés de fabrication afin de gagner en productivité, en précision et donc en qualité afin de rester compétitif dans ces secteurs très concurrentiels. Par ailleurs ces secteurs nécessitent des produits de haute qualité avec des propriétés mécaniques généralement élevées. L'utilisation de fibre de carbone et notamment d'unidirectionnels permet d'atteindre les cahiers des charges. Cependant, le paramètre primordial pour ces applications, une fois le cahier des charges rempli, est la qualité. En effet, en aéronautique, toutes les pièces de structure sont contrôlées aux différentes étapes de fabrication, les coûts des non-qualités peuvent alors être très importants. Par ailleurs, le prix des matériaux hautes performances utilisés, comme le carbone et les polymères à haute Tg, nécessite d'avoir un taux de déchet très faible pour être compétitif. Enfin, pour diminuer les temps d'arrêt machine, le conditionnement des semi-produits doit être optimisé, cela passe notamment par l'utilisation de bobines de grandes longueur ne contenant aucun défauts à écarter lors de la dépose. C'est pour répondre à ces exigences que les semi-produits selon l'invention ont été développés.

Ce type de produit est généralement obtenu en plusieurs étapes qui peuvent être réalisées séparément ou en ligne. La première étape consiste à obtenir une nappe de carbone unidirectionnelle formée de plusieurs mèches de carbone. Une fois les filaments alignés et la masse surfacique de carbone ajustée, la nappe est plongée dans une dispersion de polymère en phase liquide, c'est la phase d'imprégnation. Une fois les filaments chargés de polymère, la nappe est chauffée afin de faire fondre ce polymère et d'évacuer la phase liquide. Enfin, une fois la nappe consolidée, elle est découpée en ruban de largeur contrôlée, puis enroulée sur des bobines. Les inconvénients majeurs de ce procédé est que la découpe fait que des filaments peuvent dépasser des bords du ruban et que, si la découpe n'est pas parfaitement parallèle aux filaments, ces derniers ne sont pas rigoureusement orientés dans la direction longitudinale du ruban.

EP 1 007 309 décrit la production de rubans continus par imprégnation de mèches de fils en matériau inorganique, type carbone ou verre, dans un bain de polymère avec application d'un cisaillement. Ce procédé vise la production de ruban pour le procédé indirect, avec un taux de polymère allant de 25 à 75 % en poids. L'exemple 1 décrit le passage d'une mèche de fils de verre dans un bain d'imprégnation, puis dans une filière de section rectangulaire de dimensions 0,64 cm x 0,023 cm, pour produire un ruban ayant ces dimensions. Il s'agit donc d'un procédé d'imprégnation par voie fondue dont la vitesse de production est limitée (une vitesse atteignant 1676 cm/min est mentionnée), dans lequel l'imprégnation dépend directement de la viscosité du polymère et qui ne permet pas de travailler avec tous les types de polymères. De plus, ce procédé ne permet pas d'avoir des bobines de grande longueur (supérieure à 100 m) sans faire d'épissure ou « splice », ce qui gendre des discontinuités du renfort et donc potentiellement une diminution des propriétés mécaniques. D'autres inconvénients sont le coût énergétique d'élimination de l'eau ou du solvant et l'impact écologique en cas d'utilisation de solvant.

Le document FR 2 939 069 traite également de la fabrication de rubans de filaments de renfort imprégné présentant une largeur constante sur toute leur longueur. Il s'agit dans ce cas de rubans pour une utilisation en mode "direct", le taux de résine étant limité.

Les documents JPH09136976 et JP2004090352 divulgue un ruban continu imprégné ou consolidé similaire à celui de la présente application, mais revêtu et/ou imprégné à coeur d'un polymère thermodurcissable.

J Un objectif de l'invention est de produire et proposer un ruban de renfort de grande longueur d'un seul tenant, sans découpe et sans épissure, pouvant atteindre la longueur de la mèche de la bobine d'alimentation, par exemple pouvant atteindre et dépasser les 1000 mètres, tout en ayant une largeur très régulière pouvant être caractérisée par un très faible écart-type et/ou une bonne gestion de la répartition du polymère.

Un autre objectif de l'invention est de produire et proposer un tel ruban avec un taux contrôlé de polymère.

Un autre objectif de l'invention est de produire et proposer un tel ruban dont les filaments constitutifs sont rigoureusement parallèles à la direction longitudinale du ruban.

Un objectif de l'invention est donc de proposer un procédé permettant de fabriquer un tel ruban en continu.

Un autre objectif de l'invention est de produire et proposer un tel ruban qui soit souple, notamment dont la souplesse peut facilement être ajustée, et de préférence qui soit non cassant.

Un autre objectif encore de l'invention est de produire et proposer un tel ruban à un coût compétitif.

Ces objectifs sont atteints par un procédé de production de ruban en continu à partir d'une mèche de filaments.

2

La présente invention a pour objet un procédé de fabrication d'un ruban de filaments de renfort, imprégné par une matrice polymère thermoplastique, ruban qui présente une largeur constante sur toute sa longueur, dans lequel les filaments s'étendent selon une direction parallèle à la longueur du ruban. Ce procédé peut s'appliquer au traitement d'une mèche issue d'une bobine d'alimentation ou, simultanément et parallèlement de plusieurs (2 ou plus) mèches issues d'autant de bobines d'alimentation. Les bobines d'alimentation peuvent être notamment d'un type couramment utilisé, le plus couramment une bobine croisée (la mèche est enroulée avec un trancannage et de manière croisée) ou éventuellement une bobine avec simple trancannage.

Ce procédé est notamment caractérisé en ce qu'il comprend, pour chaque mèche (une ou plusieurs mèches pouvant être traitées simultanément), les étapes de fabrication suivantes, depuis une bobine d'alimentation en mèche jusqu'à une bobine de stockage de ruban:

a) gestion de la tension entre la bobine d'alimentation et la bobine de stockage,
b) guidage de la mèche de manière à obtenir une mèche se déplaçant en translation sur une ligne coïncidant avec un axe longitudinal dit axe machine s'étendant jusqu'à proximité de la bobine de stockage,
c) éventuellement étalement transverse de la mèche à une largeur prédéterminée supérieure à la largeur du ruban,
d) gestion de la largeur de la mèche,
e) éventuellement traction de la mèche, de préférence par pincement ou foulardage,
f) mise à la masse de la mèche,
g) dépôt du polymère sous forme de poudre sur la mèche, par poudrage électrostatique, de préférence avec un taux massique de polymère d'environ 20 % à environ 75 %, obtention d'un ruban imprégné,
h) fusion ou ramollissement du polymère,
i) calibration en largeur et en épaisseur du ruban,
j) éventuellement mesure de la largeur et/ou de l'épaisseur du ruban,
k) bobinage du ruban sur la bobine de stockage.

Selon l'invention, une mèche est définie comme étant constituée d'un ensemble de filaments (ou fibres) et comporte d'environ 1 000 à environ 80 000 filaments, de préférence d'environ 3 000 et environ 24 000 filaments. Les mèches utilisées dans le cadre de l'invention sont, de préférence, en une matière choisie parmi le carbone, les céramiques, les verres, les silices, les basaltes, et les aramides, ou encore tout autre matériau utilisé dans le domaine des matériaux composites, par exemple les filaments ou fibres métalliques, les filaments pouvant être d'origine naturelle ou synthétique. Le carbone est particulièrement préféré. Les céramiques utilisables sont notamment le carbure de silicium et les oxydes réfractaires, par exemple, alumine et zircone. La mèche de départ peut se présenter sous une forme déjà aplatie ou plus ou moins ronde. Généralement, les mèches sont présentées en bobines de mèche plate bobinée croisé. Dans un mode de réalisation préféré, on utilise des mèches de carbone comprenant d'environ 1 000 à environ 80 000 filaments, de préférence d'environ 3 000 et environ 24 000 filaments.

On appelle ruban le composite plat formé de la mèche et du polymère thermoplastique. En fin de fabrication, ce ruban est avantageusement stocké sur bobine ou support directement utilisable sur les robots de dépose. Le bobinage peut être du type fil à fil (le ruban est enroulé bord à bord, ce mode est préféré) ou du type croisé.

Les filaments constitutifs de la mèche ou du ruban sont de préférence continus. Les filaments utilisés présentent en général une section droite transversale sensiblement circulaire (filaments ronds) ou, de préférence, sensiblement parallélépipédique ou elliptique (filaments plats). Les mèches présentent des largeurs irrégulières, comme décrit dans le tableau ci-dessous, donnant la largeur des mèches de carbone en fonction du nombre de filaments et de leur titre.

| Nombre de filaments | Titre (tex) | Variation de largeur d'une mèche |
|---|---|---|
| 3K | 200 | 1 à 3 mm |
| 12K | 445 | 2à5mm |
| | 800 | 3à7mm |
| 24K | 1000 | 5 à 10 mm |
| | 1600 | 5 à 12 mm |

On peut utiliser tout type de fil de carbone. De préférence, on peut utiliser des fils Haute Résistance (HR) dont le module en traction est compris entre 220 et 241 GPa et dont la contrainte à la rupture en traction est comprise entre 2450 et 4830 MPa, des fils de Module Intermédiaire (IM) dont le module en traction est compris entre 242 et 300 GPa et dont la contrainte à la rupture en traction est comprise entre 3450 et 6400 MPa et des fils Haut Module (HM) dont le module en traction est compris entre 345 et 600 GPa et dont la contrainte à la rupture en traction est comprise entre 3450 et 5520 MPa (voir ASM Handbook, ISBN 0-87170-703-9, ASM International 2001).

En a), on dit que l'on gère ou ajuste la tension entre les deux bobines, ce qui signifie que la mèche et le ruban qui en découle de manière continue sont maintenus sous tension entre la bobine d'alimentation et la bobine de stockage. La tension tout au long de la ligne et du procédé peut varier selon les étapes et dispositifs que la mèche, puis le ruban traversent. Cette tension peut notamment être comprise et varier entre environ 5 et environ 50 N. Le guidage de la mèche à l'étape b) permet son alignement précis dans l'axe machine. L'étape de guidage peut notamment supprimer le trancannage de la mèche et/ou éliminer les mouvements latéraux liés au débobinage d'une mèche enroulée croisée sur la bobine d'alimentation. Le guidage peut utiliser notamment au moins un jeu d'au moins deux barreaux orientés de manière à pouvoir ramener la mèche issue de la bobine d'alimentation sur une ligne ou trajectoire parfaitement alignée sur l'axe machine (le positionnement dans l'axe inclut le positionnement à une hauteur déterminée, qui est celle de l'axe machine), au moins jusqu'au refroidissement du ruban imprégné. On peut utiliser par exemple un jeu de deux barreaux à 90°. Le premier barreau est parallèle à l'axe de la bobine, orienté à 90° par rapport au sens de défilement de la mèche, cette dernière glissant de gauche à droite sur le premier barreau à cause du trancannage de la bobine d'alimentation. Ce premier barreau permet de régler l'alignement de la mèche dans le reste du procédé. Il permet aussi de forcer la mèche à s'aplatir, notamment, mais pas seulement, dans le cas d'une mèche initiale ronde. Ensuite, la mèche passe au contact du second barreau situé en dessous du premier, orienté à 90° par rapport au précédent et perpendiculairement à l'axe machine, et qui permet de garder la mèche plate et d'ajuster la hauteur de la mèche pour la suite du procédé.

Suivant une première modalité, la mèche a d'origine une largeur constamment supérieure à la largeur du ruban final.

Suivant une deuxième modalité, la largeur de la mèche est constamment ou ponctuellement égale, proche ou inférieure à la largeur du ruban final. On prévoit dans ce cas l'étalement de la mèche à l'étape c). La mèche ramenée dans l'axe machine est étalée transversalement. L'étalement transverse de la mèche se fait à largeur supérieure à la largeur nominale du ruban. Cette étape garantit que la mèche, au fur et à mesure de sa soumission à cette étape, a toujours une largeur supérieure à la largeur nominale du ruban final. Pour ce faire, on peut notamment faire passer la mèche dans un dispositif d'embarrage, comprenant un ou plusieurs éléments d'embarrage, tels que des barreaux d'embarrage, qui permettent d'étaler la mèche pour que sa largeur soit toujours supérieure à la largeur nominale du ruban final. On peut notamment utiliser des barreaux ayant un diamètre compris entre environ 10 mm et environ 100 mm. De préférence, les barreaux ont une surface peu abrasive, par exemple chrome, aluminium ou céramique. Afin d'obtenir la largeur désirée il est possible de chauffer les barreaux et/ou de les faire vibrer, ce qui accentue l'étalement.

On gère ou ajuste en d) la largeur de la mèche, ce qui signifie que la largeur de la mèche est diminuée à une valeur prédéterminée par le passage dans un dispositif de calibration. Dans le cas de la mèche étalée en c), on ramène la largeur à une valeur prédéterminée, notamment comprise entre la largeur d'étalement maximum et la largeur nominale du ruban final. Pour effectuer cette gestion de largeur, on peut notamment faire passer la mèche dans une gorge qui calibre la mèche à la largeur désirée. Notamment, la largeur après étalement est d'environ 1,5 à environ 4,5, par exemple d'environ 2 à environ 3 fois la largeur nominale du ruban final. Par exemple, la largeur de calibration est d'environ 10 mm à environ 29 mm pour un nominal du ruban de 6,35 mm environ.

En aval de cette étape, à un moment de son parcours dans lequel la mèche est sous forte tension (il peut y avoir une tension allant jusqu'à 5 kg par mèche), il est préférable à l'étape e) de tracter la mèche afin de maintenir sa largeur et d'appliquer à la mèche un mouvement d'avancement en direction de la bobine de stockage. Cette étape peut notamment se faire à l'aide d'un dispositif permettant de pincer la mèche et à la forcer à se mouvoir dans la direction opposée à la bobine d'alimentation. On peut notamment utiliser un foulard ou dispositif analogue.

Le travail réalisé sur la mèche jusqu'à présent permet de travailler avec des mèches initiales de qualités très différentes, ayant par exemple une largeur variable, de garantir un taux de poudre régulier et d'améliorer significativement la dispersion de largeur du ruban final.

Une étape de mesure de la largeur peut être réalisée avec un laser, comme il sera décrit plus loin.

La vitesse de défilement de la mèche et du ruban peut être notamment comprise entre environ 5 et environ 50 m/min, notamment entre environ 10 et environ 40 m/min, typiquement entre environ 15 et environ 35 m/min. Cette vitesse est adaptée aux différentes étapes, en particulier à l'étape de poudrage.

La mise à la masse f) de la mèche, pour permettre le poudrage électrostatique, est avantageusement réalisée le plus près possible du poudrage, donc juste en amont de cette étape.

L'étape g) de poudrage détermine la répartition de la matrice dans le ruban final ainsi que le taux fibre/matrice dans le produit composite final. De préférence, on utilise un procédé de poudrage électrostatique. La mèche est mise à la masse, notamment en passant au contact d'un ou de plusieurs barreaux mis à la masse, par exemple un ou plusieurs barreaux d'embarrage.

Cette étape de poudrage comprend une première étape de fluidisation à sec. La fluidisation consiste à faire passer un gaz entre des particules de polymère de petite taille. Lorsque le frottement du gaz crée une force suffisante pour compenser le poids de toutes les particules du lit, on dit que le lit de particules est fluidisé. L'utilisation du lit fluidisé sec permet de déposer des quantités de poudre plus importantes et de travailler avec plus de poudre par rapport aux pots à pression.

On utilise de préférence un ou plusieurs pistolets ou buses de poudrage électrostatique utilisant le principe de décharge corona. Cela consiste à appliquer une haute différence de potentiel entre la pointe du pistolet et la pièce à recouvrir, qui est reliée à la masse. Le champ électrique au niveau de la pointe accélère les électrons du milieu environnant par la force de Coulomb et ionise les molécules présent dans l'air. Par effet d'avalanche, on obtient un procédé auto-entretenu qui rend le milieu environnant conducteur. Les particules de poudre traversant ce milieu ionisé se chargent par accumulation d'électrons à leur surface. Elles sont alors entraînées par le champ électrique en direction de la mèche qui est reliée à la masse. Pour les mèches de filaments non conductrices, on rend la surface conductrice avant poudrage par brumisation, métallisation ou utilisation d'un polymère conducteur.

Dans le cadre de cette invention le dépôt de la poudre se fait via l'utilisation d'un ou deux pistolet(s) sur lesquels une buse, de préférence plate, est montée. Ce type d'installation permet de créer un nuage de poudre autour de la mèche qui est elle-même reliée à la terre. La poudre qui se situe autour de la fibre se trouve alors attirée par la mèche modifiant sa trajectoire pour créer une fine couche de dépôt tout autour de la mèche. De préférence, un pistolet est disposé au-dessus de la mèche, l'autre au-dessous.

Le pilotage des pistolets se fait via une centrale qui permet de piloter indépendant les deux pistolets. Les paramètres qu'il est possible de régler sont :

- Pression d'injection : elle permet d'acheminer la poudre du lit fluidisé au pistolet
- Pression de dilution : pression supplémentaire qui permet de diluer la poudre dans le tuyau qui mène au pistolet
- Tension et intensité : ces deux paramètres permettent de contrôler la tension et l'intensité dégagée au niveau de la cathode.

Le réglage de ces paramètres permet d'ajuster le taux de poudre déposé sur la fibre et la régularité du dépôt. Les réglages sont à adapter pour chaque couple mèche/matrice.

Eventuellement on divise le ruban de carbone en plusieurs faisceaux de filaments lors du poudrage. L'utilisation de cette option rend préférable qu'une première passe de poudrage soit réalisée à l'aplomb ou au voisinage de la mèche séparée en faisceaux, et qu'une seconde passe de poudrage soit réalisée un peu plus loin, à un endroit de la ligne où le ruban est de nouveau réuni (les faisceaux contigus ayant alors eu tendance à se rapprocher les uns des autres pour tendre vers la structure de ruban telle qu'elle était avant la séparation en faisceaux, à ceci près que du polymère a été déposé dont une partie peut séparer, plus ou moins distinctement, les faisceaux contigus), afin de garantir le gainage de la mèche. Le nombre de faisceaux et la manière de les obtenir sont abordés plus loin. Plus de détails de ce mode de réalisation sont donnés à l'exemple 4.

Une fois la poudre déposée sur le fil, on parle ensuite de ruban, qui est donc constitué d'un renfort fibreux orienté dans le sens longitudinal imprégné d'une matrice polymérique. La longueur d'une bobine de ruban peut être égale ou sensiblement égale à la bobine dont le fil est issu, sans limite de longueur du fil.

Le taux massique de matrice polymérique appliqué sur la mèche étalée peut être notamment compris entre environ 20, 25 ou 30 % et environ 75%, notamment entre environ 20, 25 ou 30 % et environ 50% et plus particulièrement entre environ 30% et environ 40%. Ce taux particulièrement élevé permet d'utiliser le ruban dans le procédé indirect. Ce taux peut atteindre des valeurs importantes, supérieures à 30 ou 40 %, tout en étant souple et bien consolidé, comme on le verra plus loin.

Au stade de l'imprégnation de la mèche, le polymère qui imprègne la fibre se trouve sous forme de poudre dont les grains ont un diamètre notamment compris entre environ 10 $\mu$m et environ 300 $\mu$m et préférentiellement entre environ 30 $\mu$m et environ 200 $\mu$m.

Le procédé peut être appliqué à tout type de poudre fluidisable ayant un point de ramollissement permettant une accroche à la mèche lors du poudrage. Parmi ces poudres on peut citer plus particulièrement les polymères thermoplastiques et thermodurcissables suivants: les polyamides (notamment PA6, PAI2, PAU, PA6,6, PA 6,10, PA 6,12), les copolyamides (CoPA), les polyamides-bloc éther ou ester (PEBAX, PEBA), les polyphtalamides (PPA), les polyesters (notamment polyéthylène téréphtalate -PET-, polybutylène téréphtalate - PBT-), les copolyesters (CoPE), les polyuréthanes thermoplastiques (TPU), les polyacétales (POM, ...), les polyoléfines (notamment PP, HDPE, LDPE, LLDPE), les polyéthersulfones (PES), les polysulfones (PSU,...), les polyphénylènes sulfones (PPSU,...), les polyétheréthercétones (PEEK), les polyéthercétonecétone (PEKK), le poly(sulfure de phénylène) (PPS), les polyétherimides (PEI), les polyimides thermoplastiques, les polymères à cristaux liquides (LCP), les phénoxys, les copolymères à blocs tels que les copolymères styrène-butadiene-méthylméthacrylate (SBM), les copolymères méthylméthacrylate-acrylate de butyl-méthylméthacrylate (MAM) et leurs mélanges, les époxy, le bismaleimide, les polymères phénoliques.

Selon une caractéristique de l'invention, le matériau est un matériau thermoplastique. En premier lieu, il peut s'agir d'un matériau thermoplastique haute performance c'est-à-dire ayant un point de fusion et ou une température de transformation supérieur ou égal à 280°C. Il peut être notamment choisi parmi les PEEK, les PPS, les PEKK, les PEI, ou un mélange d'au moins deux d'entre eux.

A l'étape h), la fusion ou ramollissement de la poudre peut notamment s'effectuer en passant dans un ou plusieurs, notamment 2, fours, de préférence des fours infrarouge court ou moyen, juste après l'étape de poudrage. La régulation du ou des fours se fait de préférence en puissance pour une meilleure stabilité du procédé. Là encore, les réglages sont à adapter pour chaque couple mèche/matrice mais aussi en fonction de la vitesse de défilement et du taux de poudre visé. La température appliquée au polymère est en tous cas supérieure à son point de fusion (e.g. pour les polymères semi-cristallins) ou suffisante pour passer le polymère pulvérulent à l'état visqueux permettant l'imprégnation. Pour le PEEK, la température peut notamment être comprise entre 300 et 450 °C, plus particulièrement entre 350 et 450°C.

La calibration du ruban à l'étape i) à une largeur cible est une caractéristique déterminante puisque, par exemple, les variations de largeur entraînent des non-qualités au moment de la dépose automatisée du ruban par les robots de dépose pour former. Une largeur trop faible génère des « gap » alors qu'une largeur trop importante génère des « overlap » et des bourrages au niveau de la tête de dépose.

Pour obtenir une dispersion en largeur faible il est nécessaire d'avoir un alignement du fil parfait avant calandrage, ce qui est assuré tout au long du procédé et au stade du calibrage. On peut ainsi prévoir, en amont de la fusion, un alignement du ruban pour le faire coïncider avec l'axe machine et en particulier avec le dispositif de calibration situé en aval. On peut ainsi utiliser un plusieurs barreaux, notamment obliques.

De préférence, à l'étape i), on peut calandrer le ruban. Ce calandrage peut permettre l'alignement sur l'axe machine ou y contribuer. Surtout, le calandrage permet d'assurer l'imprégnation de la mèche par le matériau thermoplastique ou thermodurcissable, qui se trouve encore à l'état fondu. De préférence la calandre est refroidie. La température du matériau à ce stade peut lui permettre d'être suffisamment fluide pour pouvoir être mis en forme. Le calandrage peut être réalisé en faisant passer le ruban entre au moins deux rouleaux refroidis dont il est possible de réguler la pression et la température. Dans ce dispositif, le calandrage permet de faire pénétrer plus ou moins la matrice dans le ruban mais aussi, éventuellement, d'étaler le ruban.

Le taux d'imprégnation rend compte de la répartition de la matrice dans le sens transverse du ruban. Un taux d'imprégnation faible revient à avoir, selon un mode de réalisation, un ruban creux avec une répartition du polymère uniquement en périphérie de la mèche (e.g. de carbone), formant ainsi une gaine de polymère (ou couche continue) qui protège les filaments et garantit une très grande souplesse au ruban. En d'autres termes, on a une proportion réduite de filaments pris dans la matrice polymérique. Dans ce mode de réalisation, la pression de calandrage est de préférence inférieure à 1 bar, typiquement elle est comprise entre environ 0,1 et environ 0,9 bar, notamment entre environ 0,1 et environ 0,6 bar. Ce type de produit est particulièrement intéressant pour le drapage de formes complexes avec des rayons de courbure très faibles.

Au contraire, un taux d'imprégnation élevé correspondra, selon un autre mode de réalisation, à un ruban où le polymère est réparti de manière sensiblement uniforme entre les filaments (e.g. de carbone) dans le sens de la largeur et de l'épaisseur. Dans ce cas, le polymère protège les filaments du ruban par une gaine, mais elle ne forme alors pas forcément une couche extérieure continue comme dans le cas précédent. On a cependant une proportion élevée de filaments pris dans la matrice polymérique. Dans ce mode de réalisation, la pression de calandrage est de préférence supérieure ou égale à 1 bar, typiquement elle est comprise entre environ 1 et environ 4 bar. En augmentant le taux d'imprégnation, on empêche le glissement des filaments les uns contre les autres, ce qui diminue la flexibilité de celui-ci.

Selon l'invention, le paramètre de température peut être suivi en continu par la mesure de température, par exemple à l'aide d'un pyromètre infrarouge, en sortie de four et/ou avant le calandrage.

Le calandrage assure une première calibration, notamment en épaisseur, du ruban.

L'étape i) peut comprendre une calibration en largeur du ruban par passage dans un dispositif de calibration transversale ou en largeur, ou de calibration à la fois en largeur et en épaisseur. De préférence, l'étape i) comprend, d'une part, le calandrage et, d'autre part, la calibration en largeur, ou, en largeur et en épaisseur.

De préférence, on calibre à la fois dans le sens transverse et en épaisseur. On peut notamment calibrer à l'aide d'au moins deux formes de calibration, notamment gorges, antagonistes. La calibration est avantageusement réglée à la largeur nominale souhaitée pour le ruban. Différents modes de réalisation seront décrits plus loin.

Le refroidissement s'effectue progressivement entre la sortie du four et le bobinage. Il n'est pas indispensable de prévoir un dispositif de refroidissement. On a vu que le calandrage à l'étape de calibration i) est réalisée à une température suffisante, e.g. comprise entre la température de transition vitreuse et le point de fusion du polymère semi-cristallin. Avant le bobinage, la température atteinte est telle que le polymère n'est plus déformable, par exemple elle est inférieure à la température de transition vitreuse Tg du polymère semi-cristallin.

La largeur et/ou l'épaisseur du ruban peut être mesurée en j) en continu, de préférence avec son écart-type, lors de la fabrication du ruban en utilisant la méthode suivante. En aval de sa calibration et en amont de son stockage sur bobine, on effectue des mesures ponctuelles de largeur et/ou d'épaisseur tous les x cm (par exemple tous les 50 cm ou tous les 1 mètres) à l'aide d'un Laser, les données sont traitées par une unité de traitement informatique ou un ordinateur recueillant les valeurs de largeurs et calculant l'écart-type. On utilise avantageusement un laser formé d'un émetteur émettant une ligne de lumière laser et un récepteur comportant une ligne de cellules réceptrices. L'émetteur est placé d'un côté du ruban, face à l'une de ses faces planes si l'on mesure la largeur. Le récepteur est placé de l'autre côté du ruban, face à son autre face plane toujours pour la mesure de largeur. L'ombre du ruban projetée sur le récepteur permet de connaître la largeur (ou l'épaisseur) avec une grande précision.

Le bobinage à l'étape k) consiste à enrouler le ruban sur des supports de préférence compatibles avec les robots de dépose automatisés. Il peut s'effectuer de deux façon différentes : en tension ou en vitesse. Pour le bobinage en tension la broche portant la bobine de stockage adapte sa vitesse de rotation en fonction de l'information de tension du ruban, par exemple remontée par un bras danseur. Ce type de bobinage permet d'avoir un bobinage très propre et ne nécessite pas d'asservissement de vitesse avec le dispositif, tel que le foulard, qui tracte le ruban en début de ligne. Dans le cas d'un bobinage en vitesse, la vitesse de la broche est entrée en consigne, il faut alors asservir le bobinoir et le dispositif d'entraînement tel que le foulard afin d'éviter tout problème de tension dû à la différence de vitesse entre les deux appareils. Un bobinage en tension est préféré.

Le bobinage et donc la vitesse de production du ruban peut être comprise entre environ 5 et environ 50 m/min, notamment entre environ 10 et environ 40 m/min, typiquement entre environ 15 et environ 35 m/min.

Le procédé décrit dans l'invention permet de réaliser un ruban aussi bien à partir d'une seule mèche qu'à partir de plusieurs (2 ou plus) mèches.

Dans un mode de réalisation, on augmente la masse surfacique de carbone. Pour cela, au moins deux, de préférence deux, rubans de carbone sont superposés afin d'obtenir une masse surfacique donnée. Par exemple, deux rubans de carbone de 12K 800tex calibrés à 6,35 mm sont superposés afin d'obtenir une masse surfacique de 2 x 126 = 252g/m². L'association des deux fils peut se faire avant poudrage au niveau de l'étalement ou après poudrage, une fois le polymère fondu. Dans les deux cas il est nécessaire de reproduire les éléments de dévidage et de guidage décrit plus tôt. Ensuite, dans le premier cas, le mélange des filaments des deux fils se fait tout au long des embarrages utilisés pour étalés les fils. La suite de la ligne n'est pas modifiée, seul le réglage du poudrage électrostatique et la puissance des fours doivent être ajustés. Dans le cas où l'assemblage est effectué après poudrage le guidage des deux fils poudrés doit être adapté avant calibration, le reste de la ligne restant inchangé.

Un autre objet de l'invention est le ruban susceptible d'être produit par le procédé de l'invention. Conformément à l'invention, on produit un ruban de renfort continu formé de filaments de matériau inorganique unidirectionnels, substantiellement uniformément revêtu et/ou substantiellement imprégné à cœur d'un polymère thermoplastique à un taux massique compris entre environ 20, 25 ou 30% et environ 75%, notamment entre environ 20, 25 ou 30 % et environ 50% et plus particulièrement entre environ 30% et environ 40%. Le ruban est de largeur constante prédéterminée et contrôlée, avec de préférence un écart type compris entre 0,02 et 0,15 mm, de préférence entre 0,02 et 0,05 (bornes incluses), sur une longueur d'un seul tenant (sans épissure) supérieure ou égale à 100, 500, 1000 ou 5000 m, ou plus encore. On a en réalité cet écart-type sur toute la longueur de ruban produite à partir d'une longueur de mèche continue d'alimentation. A partir d'une bobine de x mètres de mèche, on produit un ruban de longueur sensiblement égale avec la largeur et l'écart-type conformes. Cet écart-type est typiquement mesuré comme décrit ci-dessus par mesure Laser. Le ruban est par ailleurs continu sur toute sa longueur, sans couper de filament et d'un seul tenant, à savoir sans épissure ou « splice ». Ses filaments constitutifs sont sensiblement parallèles à la direction longitudinale du ruban (ou parfaitement alignés dans le sens longitudinal). Ce produit est destiné aux procédés indirects de réalisation de pièces composites, à partir d'un ou plusieurs rubans. Le ruban a une largeur constante, qui peut être notamment comprise entre environ 2 mm et environ 75 mm et plus particulièrement entre environ 5 mm et environ 10 mm. Le taux de matériau thermoplastique ou thermodurcissable peut atteindre des valeurs importantes, supérieures à 30 ou 40 %, tout en étant souple et bien consolidé, comme on le verra plus loin. L'écart-type est calculé en utilisant la formule suivante :

$$\sigma_x = \sqrt{\frac{1}{n}\sum_{i=1}^{n}(x_i - \bar{x})^2}$$

avec n=nombre de mesures ; $\bar{x}$ = valeur moyenne de x ; $x_i$ = valeur de x pour n=i.

La largeur du ruban peut être mesurée avec son écart-type en continu lors de la fabrication du ruban en utilisant la méthode décrite supra, qui permet d'obtenir l'écart-type sur la longueur totale du ruban ou sur une fraction. En dehors de la ligne de production, pour caractériser un ruban conforme à l'invention, on peut procéder de la même manière, en déroulant le ruban et en effectuant des mesures de largeur ponctuelles, par exemple tous les 1 m par la mesure laser.

L'invention a aussi pour objet un ruban continu imprégné et/ou consolidé formé de filaments de matériau inorganique unidirectionnels, de préférence en carbone, uniformément revêtu et/ou imprégné à cœur d'un polymère thermoplastique, comprenant un taux de polymère compris entre environ 20, 25 ou 30% et environ 75%, notamment entre environ 20, 25 ou 30% et environ 50% en poids et de préférence entre environ 30% et environ 40% en poids, par rapport au poids du ruban. Ce ruban peut se présenter notamment sous les trois formes qui vont être décrites, à savoir creuse, imprégnée et substantiellement consolidée à cœur, imprégnée et substantiellement consolidée à cœur avec faisceaux de filaments. Le ruban a une largeur constante, notamment avec un écart-type compris entre 0,02 et 0,15 mm, de préférence entre 0,02 et 0,05 mm (bornes incluses). La largeur de ce ruban peut être notamment comprise entre environ 2 mm et environ 75 mm et plus particulièrement entre environ 5 mm et environ 10 mm. Dans un mode de réalisation, le ruban a une largeur moyenne dans la spécification 6,35 mm ± 0,15 mm avec un écart-type compris entre 0,02 et 0,05 mm, de préférence sur une longueur d'un seul tenant, celle de la mèche de départ, notamment supérieure ou égale à 100, 500, 1000 ou 5000 m. On peut ainsi avoir, par exemple, un ruban de largeur moyenne 6,35 mm avec un écart-type compris entre 0,02 et 0,05 mm.

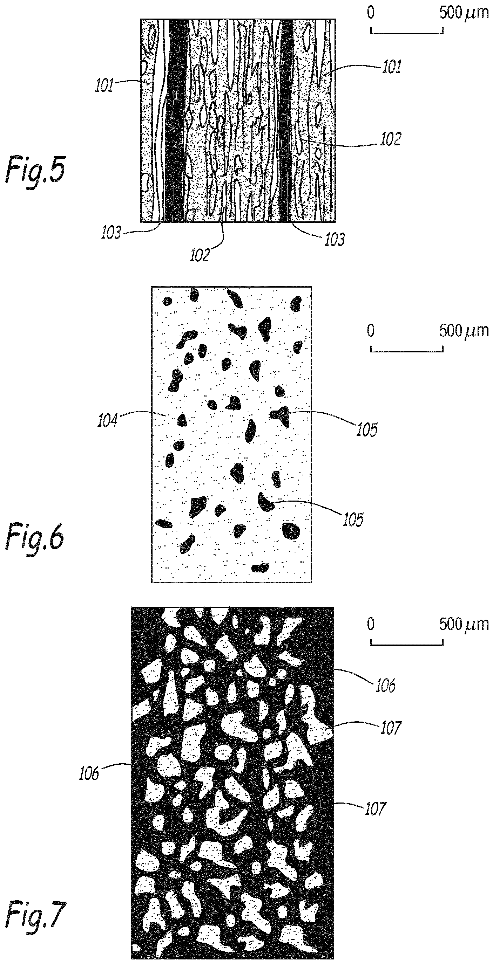

Dans un premier mode de réalisation, le ruban est imprégné et consolidé en périphérie, y compris sur ses deux bords longitudinaux (ou arêtes longitudinales), le matériau thermoplastique imprégnant les filaments à la périphérie formant une gaine substantiellement continue, y compris le long des bords du ruban. De préférence, ce ruban a un état de surface particulier, correspondant au fait qu'il est recouvert en totalité ou en majeure partie par du polymère fondu ou ramolli qui forme sensiblement un continuum de polymère d'un bout à l'autre du ruban dans le sens de la largeur et dans le sens de la longueur, comme illustré à titre d'exemple à la figure 6. L'épaisseur moyenne de polymère en surface (couche externe) peut être comprise avantageusement entre environ 10 et environ 100 $\mu$m, de préférence entre environ 25 et environ 100 $\mu$m. Le ruban comprend une certaine proportion de filaments non imprégnés de polymère (pris dans le polymère) à son intérieur. Cette proportion peut notamment représenter d'environ 20, 25 ou 30 à environ 50 % du total des filaments du ruban (ceci peut se déterminer par analyse des surfaces imprégnées et non imprégnées par traitement d'image de coupes à grossissement adéquat ; l'observation au microscope ou toute autre dispositif d'imagerie numérique (appareil photo, caméra, etc.) permet de distinguer les zones de fibres nues des zones de fibres imprégnées et prises dans le polymère, ainsi que les zones de polymère substantiellement ou totalement dépourvues de filaments)). Ce ruban est dit creux, dans la mesure où le cœur du ruban est formé de filaments non imprégnés, le cœur étant de ce fait non imprégné ou non consolidé.

Dans un deuxième mode de réalisation, le ruban est imprégné et/ou substantiellement consolidé à cœur, c'est-à-dire qu'il comprend une proportion élevée de filaments imprégnés de polymère à son intérieur. Cette proportion peut notamment représenter d'environ 80 à environ 100 % du total des filaments du ruban. De préférence, ce ruban a un état de surface particulier, correspondant au fait qu'il est recouvert en partie de polymère fondu ou ramolli, formant des phases discontinues d'un bout à l'autre du ruban dans le sens de sa largeur et dans le sens de sa longueur, comme illustré à titre d'exemple à la figure 7. Ce ruban est dit imprégné à cœur. Suivant un mode de réalisation, la proportion de filaments pris dans le polymère est comprise entre 80 % et 99, 98, 97, 96, 95 ou 90%. Des intervalles typiques sont de 90 à 100%, notamment de 95 à 100%. L'épaisseur moyenne de polymère en surface (couche externe) peut être comprise avantageusement entre environ 10 et environ 100 $\mu$m, de préférence entre environ 25 et environ 100 $\mu$m.

Selon une modalité particulière de ce ruban imprégné et substantiellement imprégné à cœur, les filaments sont distribués sous la forme de faisceaux. Les filaments s'étendent dans la direction longitudinale du ruban sous forme d'au moins deux faisceaux de filaments séparés et recouverts par du polymère. Les faisceaux sont notamment plus ou moins individualisés sur le plan transverse. On comprendra aisément que le nombre de faisceaux peut être adapté en fonction de la largeur du ruban. On peut prévoir typiquement de 2 à 50, notamment de 5 à 50, de préférence de 10 à 30 faisceaux. Les faisceaux sont notamment séparés les uns des autres par le polymère seul ou contenant éventuellement des filaments épars. Le produit imprégné peut se caractériser par une répartition des filaments sous forme de faisceaux d'une largeur comprise entre environ 200$\mu$m et environ 6000$\mu$m et une hauteur comprise entre environ 50$\mu$m et environ 250$\mu$m dont l'espacement est compris entre environ 25$\mu$m et environ 100$\mu$m. Les faisceaux de fibre sont totalement ou partiellement imprégnés de polymère afin de former un ruban qui possède une forte cohésion dans le sens transversal aux fibres. De plus, ce produit conserve une fine gaine (couche externe) de polymère. L'épaisseur moyenne de polymère en surface peut être comprise avantageusement entre environ 10 et environ 100 $\mu$m, de préférence entre environ 25 et environ 100 $\mu$m.

La mesure du taux d'imprégnation peut être réalisée par analyse d'image (utilisation de micrioscope ou d'appareil photo ou de caméra numérique, notamment), d'une coupe transversale du ruban, en divisant la surface du ruban imprégnée par le polymère par la surface totale du produit (surface imprégnée + surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum. Concernant les taux d'imprégnation, typiquement : produit creux : d'environ 30% à environ 70% et préférentiellement d'environ 40% à environ 60% ; produit imprégné : d'environ 70% à environ 100% et préférentiellement d'environ 90 à environ 98% ; produit imprégné avec structure faisceaux : d'environ 70% à environ 100% et préférentiellement d'environ 90 à environ 100%.

La mesure d'épaisseur de la gaine de polymère est effectuée par les mêmes outils, notamment à l'aide d'un microscope à partir d'une coupe transversale du ruban (la préparation de l'échantillon est identique à celui destiné à la mesure du taux d'imprégnation).

La souplesse du ruban peut être caractérisée par un rigidimètre Taber Model 150D (Taber Industries, North Tonawanda, New York, USA) conformément à la norme NF ISO 2493-2 (Partie 2 : Testeur Taber). Toutes les mesures sont effectuées avec le calibre n°1, dit de sensibilité extrême, l'angle de flexion utilisé est de 7,5° et la moyenne de la plaquette de référence est de 88,3TSU (Taber Stiffness Unit) pour un nominal de 88TSU.

La rigidité Taber du ruban creux avec une masse de 250 UT (Unité Taber) est comprise entre environ 5 TSU et environ 25 TSU et plus précisément entre environ 10 TSU et environ 20 TSU.

Avec ce même dispositif, la rigidité du ruban imprégné à cœur est comprise entre environ 45 TSU et environ 65 TSU et plus précisément entre environ 50 TSU et environ 60 TSU. La même mesure peut être effectuée avec une masse de 500UT sur le ruban imprégné à cœur, la rigidité Taber est alors comprise entre environ 20 TSU et environ 40 TSU et plus précisément entre environ 25TSU et environ 35TSU.

Ceci est à comparer avec la rigidité Taber d'un ruban obtenu par imprégnation standard (bain d'imprégnation), qui est typiquement comprise entre environ 65 TSU et environ 85 TSU et plus précisément entre environ 70 TSU et environ 80 TSU.

Un ruban selon l'invention avec une proportion de filaments pris dans la matrice polymérique inférieur à 100% a la particularité remarquable de ne pas se rompre lorsque celui-ci est replié sur lui-même, contrairement aux rubans obtenus par imprégnation standard en phase liquide. Sans vouloir être lié à la théorie, on pense qu'une proportion de filaments, notamment de carbone, qui ne sont pas enchâssés dans la matrice, peuvent glisser les uns sur les autres lors de la déformation du ruban. Le ruban selon l'invention ayant une proportion de filaments pris dans la matrice polymérique inférieure à 100%, de préférence inférieure ou égale à 99, 98, 97, 96, 95 ou 90%, ne rompt pas lors d'un pliage, ce qui n'est pas le cas des rubans obtenus par imprégnation standard qui peuvent casser lorsqu'ils sont repliés sur eux-mêmes. Il résulte de ceci que les rubans selon l'invention ont une capacité de pliage inégalée, avec un rayon de courbure très réduit.

L'invention aussi pour objet une installation permettant de mettre en œuvre le procédé selon l'invention et produire un ruban selon l'invention. Cette installation comprend notamment les éléments suivants.

a) Au moins une broche porte bobine avec frein.

b) Un dispositif de dé-trancannage et/ou d'alignement du fil dans l'axe machine ; en variante, si l'on dispose d'une bobine d'alimentation de mèche sans trancannage, le dispositif est un dispositif d'alignement du fil dans l'axe machine ; le dispositif peut par exemple comporter un jeu de deux barreaux à 90°, un premier barreau parallèle à l'axe de la bobine, orienté à environ 90° par rapport au sens de défilement de la mèche sortant de la bobine, et un second barreau situé en dessous du premier, orienté à environ 90° par rapport au précédent et perpendiculairement à l'axe machine, comme décrit *supra.*

c) éventuellement un dispositif d'étalement transverse de mèche, notamment un dispositif d'embarrage fonctionnant sur le principe de l'application d'une tension sur la mèche provoquant l'étalement transverse des filaments, notamment du type comportant au moins 1, de préférence plusieurs (typiquement de 2 à 7) barreaux perpendiculaire à l'axe machine et dont au moins 1 est situé au-dessus ou au-dessous de cet axe machine (ce qui permet d'imposer une tension à la mèche, provoquant son ouverture) ; les barreaux peuvent notamment avoir un diamètre compris entre environ 10 mm et environ 100 mm ; ils ont de préférence une surface peu abrasive, par exemple en chrome, aluminium ou céramique ; ils peuvent être chauffés et/ou être vibrants ; ils peuvent avoir une forme cylindrique, ovale ou elliptique régulière ou à section non constante, ils peuvent être rectilignes ou cintrés, ils peuvent être freinés ou non

d) Un dispositif de calibration en largeur, permettant de gérer ou ajuster la largeur de la mèche. Ce dispositif peut notamment comprendre une pièce munie d'une gorge ramenant les filaments de la mèche à la largeur de la gorge. La largeur de la gorge peut être avantageusement déterminée par la largeur du ruban à produire, par exemple, la largeur de calibration (ou de la gorge) est de 1,5 à 4,5, notamment de 2 à 3 fois la largeur nominale du ruban final.

e) Eventuellement un dispositif de pincement et de traction de la mèche, comportant de préférence deux rouleaux dont l'un au moins est entraîné en rotation, par exemple un foulard ou dispositif analogue, permettant de pincer la mèche afin de maintenir sa largeur et d'appliquer à la mèche un mouvement d'avancement en direction de la bobine de stockage ; le foulard ou dispositif analogue peut notamment comporter au moins deux rouleaux disposé l'un au-dessus de l'autre, l'un au moins d'entre eux est déplaçable en direction de l'autre afin d'appliquer une pression à un matériau, en l'occurrence la mèche, qui passerait entre eux, et dont l'un au moins est entraîné en rotation.

f) Eventuellement un dispositif de mesure de la largeur de la mèche, notamment un laser, comme décrit *supra.*

g) Au moins une pièce métallique (de préférence en métal bon conducteur de l'électricité et de surface non abrasive) mise à la masse. Cette pièce métallique peut être avantageusement placée le plus près possible du poudreur qui va être décrit. Il peut s'agir d'un ou de plusieurs (typiquement 2) barreaux métalliques.

h) Au moins un poudreur électrostatique ou dispositif de poudrage électrostatique. De préférence le poudreur comporte un fluidiseur ou dispositif de fluidisation à sec avec une enceinte de stockage de poudre maintenue à l'état fluidisé. De préférence il comporte une enceinte de poudrage dans laquelle sont disposés un ou plusieurs pistolets ou buses de poudrage électrostatique utilisant le principe de décharge corona. Les pistolets ou buses sont raccordées à l'enceinte de stockage de poudre fluidisée par des tubulures. De préférence, le poudreur comprend une centrale de pilotage du ou des pistolets, permettant de régler notamment la pression d'injection, la pression de dilution, la tension et l'intensité dégagée au niveau de la cathode. Des détails de fonctionnement sont donnés *supra.*

i) Eventuellement un système de division du ruban de carbone en plusieurs faisceaux de filaments sous le dispositif de poudrage. Ce système de division du ruban initial peut être fait en utilisant un peigne ou tout autre élément rainuré (par exemple barreau dont la surface présente des filets ou rainures s'étendant sur la circonférence du barreau) permettant la séparation des filaments de manière régulière (exemples de nombre de faisceaux ci-dessus, et donc de rainures ou analogues). L'objectif est de déposer la poudre au cœur du ruban afin d'augmenter le taux d'imprégnation.

L'utilisation de ce dispositif de division rend préférable que le premier pistolet de poudrage soit placé à l'aplomb ou au voisinage du ruban séparé en faisceaux, donc à l'aplomb ou au voisinage du dispositif de séparation ou immédiatement en aval, et que le second se trouve plus loin en aval dans le dispositif de poudrage, à un endroit où les faisceaux se sont rapprochés, ce deuxième pistolet permettant le gainage du ruban. L'emplacement précis au sein du poudreur est facilement déterminable.

j) Au moins une unité de chauffage telle qu'un four. De préférence, on utilise un ou des fours à infrarouge court ou moyen. La régulation du ou des fours se fait de préférence en puissance. Leur puissance est adaptée au polymère mis en œuvre.

k) Eventuellement, un dispositif d'alignement du ruban pour le faire coïncider avec l'axe machine et en particulier avec le calibreur qui va être décrit. On peut ainsi utiliser un ou plusieurs barreaux, notamment obliques.

l) Eventuellement, une calandre. De préférence la calandre est refroidie. La pression appliquée par la calandre est de préférence ajustable.

m) Un dispositif de calibration dans le sens transverse et en épaisseur. Il peut notamment comprendre au moins deux formes de calibration, notamment gorges, antagonistes, c'est-à-dire que l'une de formes vient agir au contact d'une première face du ruban, l'autre au contact de l'autre face du ruban. La largeur des formes est avantageusement réglée à la largeur nominale souhaitée pour le ruban. Dans un mode de réalisation, une première gorge est évasée au début, puis a une largeur nominale égale à la largeur nominale souhaitée pour le ruban final, par exemple de 6,35 mm. Cette gorge est en contact avec la face inférieure ou supérieure du ruban. Une seconde gorge est en contact avec l'autre face du ruban, elle a aussi une largeur nominale égale à la largeur nominale souhaitée pour le ruban final, par exemple de 6,35 mm. Cette gorge peut par exemple être usinée sur une roulette. Les deux gorges doivent être parfaitement alignées et peuvent par exemple être montées sur des verniers qui permettent un réglage très fin de leur position, l'une par rapport à l'autre mais aussi par rapport au défilement du ruban. Différents modes de réalisation seront décrits dans les exemples.

n) Eventuellement, un dispositif de mesure de la largeur du ruban, notamment un laser, comme décrit *supra* et dans les exemples. Ce dispositif de mesure peut être de préférence relié à un ordinateur ou processeur programmé pour régler la cadence de mesure (par exemple tous les x cm, e.g. tous les 50 cm ou tous les 1 mètre), enregistrer les valeurs mesurées tout au long de la production d'une bobine de ruban et/ou calculer l'écart-type.

o) Au moins une broche porte bobine de stockage. De préférence, cette broche est décalée par rapport à l'axe machine dans le sens de la hauteur, par exemple par un ou plusieurs (typiquement 2) barreaux de renvoi. Cette broche peut faire partie d'un dispositif de bobinage classique, permettant de bobiner croisé ou fil à fil, par exemple. La broche peut notamment être asservie en vitesse ou en tension.

Suivant une caractéristique préférée, les éléments b), c), d), e), g), h), i), j), k) et l), de préférence aussi n), sont alignés sur l'axe machine de manière que la mèche, puis le ruban ne subisse pas de mouvement de déplacement latéral sensible. De préférence encore, les éléments e), g), h), i), j), et k), de préférence aussi d) sont parfaitement alignés sur l'axe machine, de manière que la mèche, puis le ruban ne subisse pas de mouvement de déplacement latéral ou en hauteur sensible Le dispositif d'embarrage c) est quant à lui de préférence disposé de manière que l'entrée et la sortie de la mèche se fasse en étant parfaitement alignée sur l'axe machine, latéralement et de préférence aussi en hauteur.

Des dispositifs d'entraînement sont prévus. Ils comprennent des dispositifs pour entraîner en rotation la broche du dispositif de bobinage du ruban formé. Ils comprennent aussi le foulard ou analogue en e). Ces dispositifs d'entraînement peuvent avantageusement être asservis, permettant de gérer la tension de la mèche, puis du ruban, tout au long de la ligne de production.

L'installation peut comprendre plusieurs lignes de production permettant de produire simultanément plusieurs rubans à partir de plusieurs mèches.

L'invention concerne également les pièces ou articles composites fabriqués à partir d'un ruban conforme à l'invention ou produit selon le procédé de l'invention. Ces pièces ou articles sont formés en tout ou partie de ruban, la pièce ou article ayant été consolidée à chaud, par exemple en autoclave ou en étuve, après placement du ruban pour en former l'ébauche. Dans un mode de réalisation, la pièce ou article est formée exclusivement ou principalement de ruban selon l'invention ou produit selon le procédé de l'invention.

La divulgation concerne aussi l'utilisation d'un ruban selon l'invention pour la fabrication d'un article ou pièce composite, et un tel procédé de fabrication, comprenant le placement du ruban pour former une ébauche, puis la consolidation de la pièce ou article à chaud, notamment en autoclave ou en étuve. Le ruban peut être placé bord à bord et/ou superposé, la superposition pouvant se faire suivant un ou des angle(s) adapté(s). Le placement peut être réalisé par placement de fibre automatisé (AFP : Automated Fibre Placement) ou par enroulement filamentaire, pultrusion, tressage, imprimante 3D. Le placement peut se faire sur un support ou moule.

L'invention va être maintenant décrite plus en détail à l'aide de modes de réalisation pris à titre d'exemple non limitatif et se référant au dessin dans lequel :

- La figure 1 est une représentation schématique d'une installation selon l'invention.
- Les figures 2, 3 et 4 sont des représentations schématiques de différents dispositifs de calibration selon l'invention.
- La figure 5 est une représentation schématique d'un ruban produit par le procédé standard par imprégnation en bain.
- La figure 6 est une représentation schématique d'un ruban produit par un premier mode de réalisation de l'invention.
- La figure 7 est une représentation schématique d'un ruban produit par un deuxième mode de réalisation de l'invention.
- Les Figures 8 et 9 sont des graphes représentant les mesures de largeur effectuées tous les 1 m de ruban en fonction du métrage en m produit.
- La Figure 10 est une représentation schématique en coupe transversale d'un ruban comportant des faisceaux de filaments.

Le repère numérique 1 désigne une bobine de mèche 2, par exemple de mèche de filaments de carbone. Cette bobine est montée sur une broche (non représentée), munie d'un frein ajustable. Un premier barreau 3 est parallèle à l'axe de la bobine 1 et orienté à 90° par rapport au sens de défilement de la mèche 2, cette dernière glissant de gauche à droite sur le premier barreau à cause du trancannage de la bobine d'alimentation 2. Ensuite, un second barreau 4 est situé en dessous du premier, orienté à 90° par rapport au précédent et perpendiculairement à l'axe machine. Une série de sept barreaux d'embarrage est représentée. Quatre d'entre eux référencés 5 sont disposés de manière que la mèche les tangente à leur partie supérieure, les trois autres référencés 6 étant placés en dessous de l'axe machine et amenant la mèche à tangenter leur partie inférieure en lui appliquant une contrainte telle que la mèche est étalée en largeur. Un dispositif de calibration 7 présente une gorge dans laquelle passe la mèche, laquelle y est calibrée à la largeur désirée. Un foulard 8 est disposé à la suite, ce foulard étant conçu pour pincer la mèche 2 et la forcer à se mouvoir dans la direction opposée à la bobine d'alimentation. Un dispositif à Laser de mesure de la largeur de la mèche est représenté sous 9. Deux barreaux métalliques 10 et 11 reliés à la terre sont au contact pour l'un, 10, de la face inférieure de la mèche, pour l'autre, 11, de sa face supérieure. Ces barreaux appliquent une certaine pression sur la mèche.

En 12, on a représenté une unité de poudrage électrostatique comprenant deux pistolets 13 de poudrage, alimentés en poudre fluidisée de polymère provenant d'un dispositif de fluidisation non représenté. L'un des pistolets a sa buse de pulvérisation orientée en direction d'une face de la mèche, l'autre en direction de l'autre face de la mèche. L'unité est pilotable pour assurer la dépose en continu d'une quantité déterminée de matériau thermoplastique sur la mèche 2 qui défile à l'intérieur de l'enceinte.

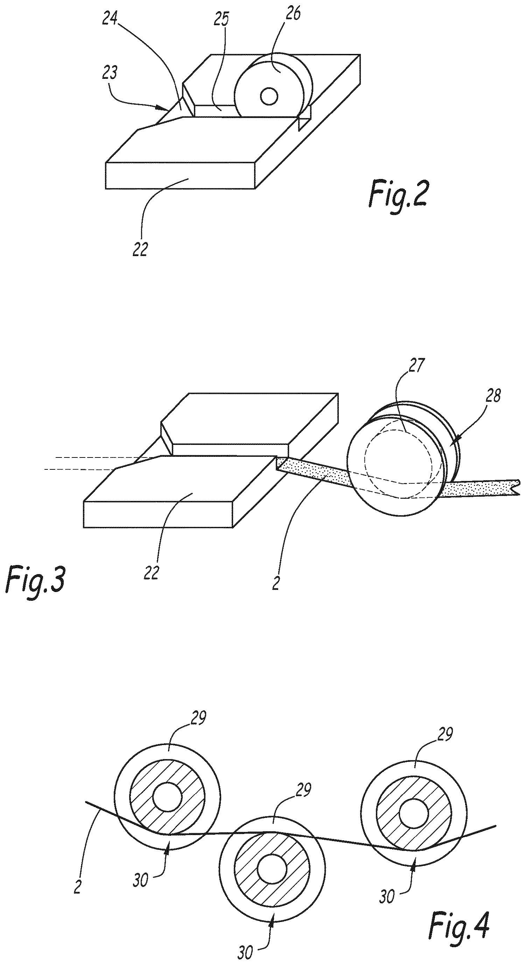

Le repère numérique 14 désigne deux fours à infra-rouge, de préférence court ou moyen, situés l'un derrière l'autre, qui sont pilotés en température et ce pilotage se fait en puissance. La mèche imprégnée de polymère fondu passe ensuite dans une calandre 15 refroidie. La calandre comporte deux rouleaux et un dispositif de réglage de la pression exercée par les rouleaux sur la mèche qui passe entre eux. La mèche passe ensuite dans un dispositif de calibration 16 dont on décrira des exemples au regard des figures 2-4. Un dispositif à Laser de mesure de la largeur du ruban est représenté sous 17, il est connecté à un ordinateur ou processeur permettant l'enregistrement de la largeur et de calcul de l'écart-type. Le dispositif effectue des mesures ponctuelles, à intervalles réguliers, selon le désir de l'utilisateur. Au stade du passage devant le dispositif à Laser, le ruban 18 proprement dit est formé. Le ruban est ensuite pris en charge par un dispositif de bobinage de ruban, comprenant deux galets de renvoi 19 et 20 et une bobine de stockage 21 montée sur une broche (non représentée) entraînée en rotation.

Suivant une caractéristique importante, les surfaces actives (au contact de la mèche ou du ruban) des éléments 4, 5, 7, 8, 14, 15, et 16 sont parfaitement alignés sur l'axe machine, de manière que la mèche, puis le ruban lorsqu'il est formé, ne subisse pas de mouvement latéral ou en hauteur sensible.

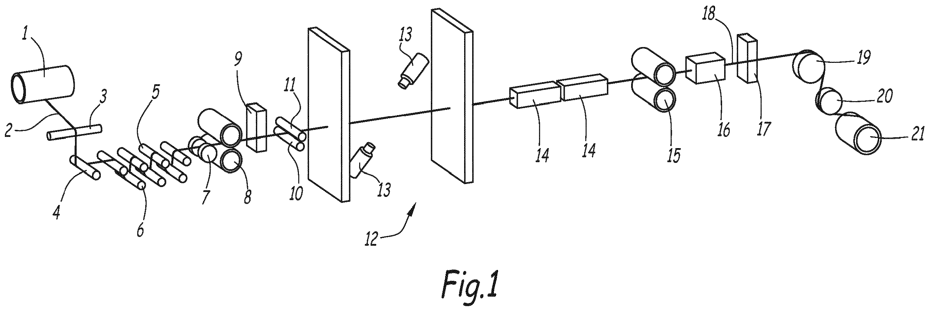

A la Figure 2 est représenté un premier mode de réalisation d'un dispositif de calibration pouvant être utilisé, notamment comme dispositif 16 dans l'installation de la Figure 1. Il comprend une platine 22 creusée d'une gorge 23 formée d'une partie évasée 24 et d'une partie rectiligne 25. La largeur de la gorge est égale à la largeur du ruban à produire. Le repère numérique 26 désigne une roulette ayant une surface de révolution plane de largeur légèrement inférieure à celle de la partie rectiligne 25 de la gorge dans laquelle elle vient s'insérer en partie. En fonctionnement, on comprend que la mèche passe au fond de la gorge 23 et la roulette vient appliquer une pression sur elle à l'intérieur de la partie 25 de la gorge 23. Un dispositif (non représenté), par exemple un vernier, permet d'effectuer cette opération.

Ceci permet de régler la pression exercée sur la mèche.

A la Figure 3, on retrouve la même platine 22. A la place de la roulette 26, on dispose en aval de la platine, une roulette 27 comportant une gorge 28 périphérique à fond plat, dont la largeur est égale à la largeur du ruban à produire. En fonctionnement, on comprend que la mèche 2 passe au fond de la gorge 23, puis dans la gorge 28 de la roulette 27, laquelle vient appliquer une pression sur elle. Un dispositif, par exemple vernier, non représenté, permet de positionner le fond plat de la gorge en hauteur par rapport à l'axe machine afin de régler la pression exercé sur la mèche.

A la Figure 4, on utilise une succession de trois roulettes 29 comportant chacune une gorge 30 périphérique à fond plat, dont la largeur est égale à la largeur du ruban à produire. Les première et troisième roulettes sont placées au-dessus de l'axe machine, la deuxième au-dessous. En fonctionnement, on comprend que la mèche 2 passe au contact des fonds des gorges 30, à la partie inférieur de la première roulette, puis à la partie supérieure de la deuxième, enfin à la partie inférieure de la troisième. Un dispositif, par exemple vernier, non représenté permet de positionner le fond plat des gorges en hauteur par rapport à l'axe machine afin de régler la pression exercée sur la mèche.

**Exemple 1** : obtention d'un ruban carbone/PEEK avec un taux massique de polymère de 34% et de largeur 6,35 mm en utilisant l'installation de la Figure 1.

On part d'une mèche plate de filaments de carbone HR HTS45 E23 de Toho Tenax, titre compris entre 810 tex et 780 tex, largeur de mèche variant entre 3 et 7 mm, enroulée croisée.

Poudre PEEK 150PB de chez Victrex, granulométrie $d_{10}$ = 30 $\mu$m, $d_{50}$ = 60 $\mu$m, $d_{90}$ = 100 $\mu$m.

On chauffe la mèche de fibre de carbone avant de l'étaler à une largeur comprise entre 8 mm et 12 mm par embarrage, sous une tension après embarrage comprise entre 4,5 kg et 2,5 kg. Les fibres passent ensuite dans une gorge de 10 mm de large, puis dans le foulard qui permet de tracter la fibre. Avant d'entrer dans la cabine de poudrage la fibre passe au contact de deux barreaux reliés à la terre.

L'étape de poudrage est réalisée à l'aide d'une installation SAMES comprenant un bac de fluidisation, 2 pistolets et une centrale de pilotage. Pour obtenir le taux de poudre visé, un seul pistolet est utilisé, ses réglages sont reportés dans le tableau suivant :

| Paramètre | Réglage |
|---|---|
| Tension (kV) | 70 |
| Intensité ($\mu$A) | 70 |
| Pression d'injection | 12 |
| Pression de dilution | 5 |

La pression du bac de fluidisation est réglée à 2 bars, ce qui permet d'avoir un régime de fluidisation homogène et régulier.

Ensuite, la fusion du polymère s'effectue en faisant passer le ruban sous deux radians infrarouges à ruban (IR moyen) SOPARA, réglés entre 50% et 70% de leur puissance. Il s'agit de radians IR à ruban de la marque SOPARA d'une longueur de 75cm et d'une puissance de 2,3kW chacun.

La calibration s'effectue en calandrant dans un premier temps le ruban, puis en le faisant passer dans une gorge de largeur nominale 6,35 mm +/- 0,05 mm.

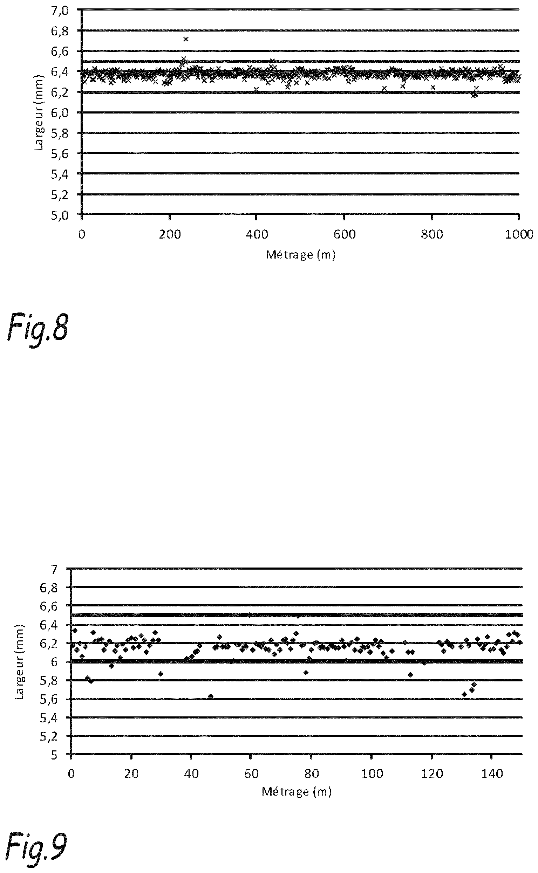

La mesure de la largeur est effectuée par un LASER Mike Model 911 (précision de mesure de 0,003 m), les données collectées tous les 1 m durant la production d'une bobine de 1000 m sont représentées à la Figure 8.

La largeur moyenne du ruban est de 6,37 mm avec un écart-type de 0,04 mm.

Le bobinage s'effectue en tension, à une vitesse comprise entre 15 m/min et 20 m/min avec un bobinoir SAHM.

La Figure 6 est une vue schématique de la surface des rubans observés à la loupe binoculaire grossissement 0,6x3. Le repère numérique 104 désigne le revêtement de polymère, relativement continu, et ne laissant apparaître les filaments de carbone que sur des zones discrètes désignées par les repères numériques 105.

**Exemple 2** : obtention d'un ruban carbone/PEEK avec un taux massique de polymère de 34% et de largeur 6,35 mm en utilisant l'installation de la Figure 1.

On part d'une mèche ronde de filaments de carbone HM M46JB 12K 50B Toray, titre de 445 tex, largeur de mèche variant entre 2 et 5 mm, enroulée croisée.

Poudre PEEK 150PB de chez Victrex, granulométrie $d_{10}$ = 30 $\mu$m, $d_{50}$ = 60 $\mu$m, $d_{90}$ = 100 $\mu$m.

On chauffe la mèche de fibre de carbone avant de l'étaler à une largeur comprise entre 5 mm et 8 mm par embarrage, sous une tension après embarrage comprise entre 4,5 kg et 2,5 kg. Les fibres passent ensuite dans une gorge de 8 mm de large, puis dans le foulard qui permet de tracter la fibre. Avant d'entrer dans la cabine de poudrage la fibre passe au contact de deux barreaux reliés à la terre.

L'étape de poudrage est réalisée comme à l'exemple 1. La pression du bac de fluidisation est réglée à 2 bars, ce qui permet d'avoir un régime de fluidisation homogène et régulier. Ensuite, la fusion du polymère s'effectue en faisant passer le ruban sous les deux radians infrarouges à lampe SOPARA (longueur de 75 cm et d'une puissance de 3 kW chacun), réglés entre 50% et 70% de leur puissance.

La calibration s'effectue en calandrant dans un premier temps le ruban, puis en le faisant passer dans une gorge de largeur nominale 6,35 mm +/- 0,05 mm.

La mesure de la largeur est effectuée par le LASER Mike, comme à l'exemple 1, les données collectées tous les 1 m durant la production d'une bobine de 150 m sont représentées à la Figure 9.

La largeur moyenne est de 6,16 mm avec un écart-type de 0,13 mm.

Le bobinage s'effectue en tension, à une vitesse comprise entre 5 m/min et 20 m/min avec un bobinoir SAHM.

La Figure 7 est une vue schématique de la surface des rubans observés à la loupe binoculaire grossissement 0,6x3. Le repère numérique 106 désigne les filaments de carbone et cette fois, le polymère resté en surface ne forme pas un revêtement quasi continu, mais des zones discrètes 107.

Par comparaison aux Figures 6 et 7, la Figure 5 montre ce que l'on obtient par le procédé d'imprégnation standard par immersion dans un bain. Le repère numérique 101 désigne des zones continues de polymère en surface, le repère 102 désigne des amas discrets de polymère et le repère 103 désigne des filaments nus.

**Exemple 3** : Production d'un article composite

Un robot de placement de fibre automatisé (AFP : Automated Fibre Placement) est programmé pour déposer le ruban selon l'exemple 1 ou selon l'exemple 2 sur un support, jusqu'à former l'ébauche de la pièce à fabriquer. Le robot place le ruban bord à bord pour former ainsi un pli, puis superpose un autre pli sur le précédent, la superposition pouvant se faire suivant un ou des angle(s) adapté(s), selon le programme de production de l'ébauche. L'ébauche formée est ensuite placée selon un premier sous-exemple dans une étuve et selon un deuxième sous-exemple dans un autoclave. La consolidation est conduite à son terme et la pièce composite consolidée est obtenue.

Des pièces composites ont été formées avec succès à partir de ruban selon l'exemple 1.

**Exemple 4** : **Production d'un ruban à faisceaux de filaments**

Dans le dispositif de poudrage 12, on installe un barreau à rainures circonférentielles, les rainures ayant une largeur qui dépend de la largeur des faisceaux visée ; typiquement, cette largeur peut être comprise entre environ 0,25 et environ 2 mm. Le ruban est amené au contact de ce barreau, de manière permanente ou intermittente, pour assurer la séparation de la mèche en faisceaux. Le premier pistolet de poudrage projette la poudre sur la mèche séparée en faisceaux, notamment immédiatement en aval du barreau. Le deuxième pistolet est disposé un peu en aval, notamment quelques centimètres plus loin, en un emplacement ou les faisceaux se sont rapprochés.

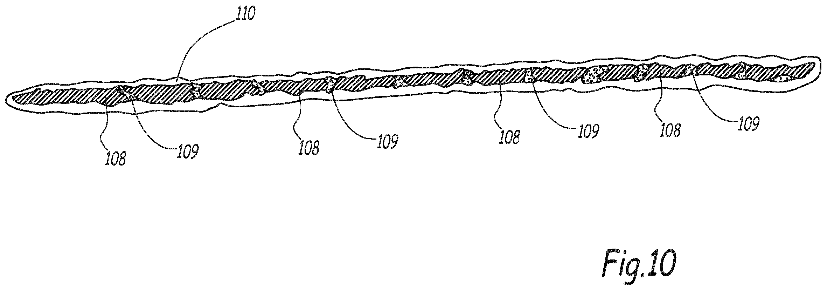

Le produit imprégné issu de cette mise en œuvre, visible de manière schématique à la Figure 10, se caractérise par une répartition des filaments sous forme de faisceaux 108 d'une largeur comprise entre $200\,\mu m$ et $6000\,\mu m$ et une hauteur comprise entre $50\,\mu m$ et $250\,\mu m$ dont l'espacement (zone de polymère 109) est compris entre $25\,\mu m$ et $100\,\mu m$. De plus, ce produit conserve une fine gaine 110 de polymère d'une épaisseur comprise entre $25\,\mu m$ et $100\,\mu m$. Ce produit présente une forte cohésion dans le sens transversal aux filaments. Son état de surface peut être similaire à celui observé avec le produit creux.

**Revendications**

1. Procédé de fabrication d'un ruban de filaments de renfort imprégné par une matrice polymère thermoplastique, ruban qui présente une largeur constante sur toute sa longueur, dans lequel les filaments s'étendent selon une direction parallèle à la longueur du ruban, à partir d'une mèche de filaments issue d'une bobine d'alimentation, le procédé comprenant les étapes suivantes, depuis une bobine d'alimentation (1) en mèche jusqu'à une bobine de stockage (21) de ruban imprégné et consolidé :

   a) gestion de la tension entre la bobine d'alimentation et la bobine de stockage,
   b) guidage de la mèche de manière à obtenir une mèche se déplaçant en translation sur une ligne coïncidant avec un axe longitudinal dit axe machine s'étendant jusqu'à proximité de la bobine de stockage,
   c) éventuellement étalement transverse de la mèche à une largeur prédéterminée supérieure à la largeur nominale du ruban,
   d) gestion de la largeur de la mèche,
   e) éventuellement traction de la mèche, de préférence par pincement ou foulardage,

f) mise à la masse de la mèche,

g) dépôt du polymère sous forme de poudre sur la mèche, par poudrage électrostatique, avec un taux massique de polymère d'environ 20 % à environ 75 %, obtention d'un ruban imprégné,

h) fusion ou ramollissement du polymère,

i) calibration en largeur et en épaisseur du ruban,

j) éventuellement mesure de la largeur du ruban,

k) bobinage du ruban sur la bobine de stockage.

2. Procédé selon la revendication 1, dans lequel le poudrage électrostatique est effectué avec une poudre de polymère maintenue sous la forme d'un lit fluidisé, puis déposée au moyen d'un ou de plusieurs pistolets de poudrage électrostatique.

3. Procédé selon la revendication 1 ou 2, dans lequel à l'étape de calibration i), on calandre le ruban, puis on le calibre transversalement.

4. Procédé selon la revendication 3, dans lequel on calandre à l'aide d'une calandre refroidie (15).

5. Procédé selon la revendication 3 ou 4, dans lequel on calibre à la fois dans le sens transverse et en épaisseur.

6. Procédé selon la revendication 5, dans lequel on calibre à l'aide d'au moins deux gorges antagonistes ou d'au moins une gorge et une surface plane antagoniste.

7. Procédé selon l'une des revendications précédentes, dans lequel on calibre à la largeur nominale souhaitée pour le ruban.

8. Procédé selon l'une des revendications précédentes, dans lequel on effectue l'étalement transverse c) de la mèche à une largeur prédéterminée supérieure à la largeur nominale du ruban, par étalement de la mèche, puis on calibre la mèche à une valeur prédéterminée.

9. Procédé selon la revendication 8, dans lequel la largeur après étalement est d'environ 1,5 à environ 4,5, par exemple d'environ 2 à environ 3 fois la largeur nominale du ruban final.

10. Procédé selon la revendication 8 ou 9, dans lequel à l'étape d) on ramène la largeur de la mèche étalée sous c) à une valeur comprise entre la largeur d'étalement maximum et la largeur nominale du ruban final.

11. Procédé selon l'une quelconque des revendications précédentes, comprenant l'étape e) de traction de la mèche.

12. Procédé selon l'une quelconque des revendications précédentes, dans lequel la vitesse de défilement de la mèche et du ruban est comprise entre environ 5 et environ 50 m/min, notamment entre environ 10 et environ 40 m/min, typiquement entre environ 15 et environ 35 m/min.

13. Procédé selon l'une quelconque des revendications précédentes, dans lequel, en amont de la fusion h), on aligne le ruban pour le faire coïncider avec l'axe machine et avec le dispositif de calibration de i).

14. Procédé selon l'une quelconque des revendications 3 à 6, dans lequel le calandrage à l'étape de calibration i) est réalisée à une température comprise entre la température de transition vitreuse et le point de fusion du polymère semi-cristallin.

15. Procédé selon l'une quelconque des revendications 3 à 6, dans lequel la pression de calandrage est inférieure à 1 bar, typiquement comprise entre environ 0,1 et environ 0,9 bar, notamment entre environ 0,1 et environ 0,6 bar.

16. Procédé selon l'une quelconque des revendications 3 à 6, dans lequel la pression de calandrage est supérieure ou égale à 1 bar, typiquement comprise entre environ 1 et environ 4 bars.

17. Procédé selon l'une quelconque des revendications précédentes, dans lequel le polymère déposé à l'étape g) est un polymère thermoplastique ayant un point de fusion ou une température de transformation supérieur ou égal à 280°C.

**18.** Procédé selon la revendication précédente, dans lequel le polymère thermoplastique est choisi parmi PEEK, PPS, PEKK, PEI, ou un mélange d'au moins deux d'entre eux.

**19.** Procédé selon l'une quelconque des revendications précédentes, dans lequel le bobinage à l'étape k) est effectué en tension ou en vitesse.

**20.** Procédé selon l'une quelconque des revendications précédentes, dans lequel les filaments de renfort constituant le ruban sont en carbone.

**21.** Procédé selon l'une quelconque des revendications précédentes, dans lequel on réalise un ruban à partir d'une seule mèche ou à partir de 2 mèches ou plus.

**22.** Procédé selon l'une des revendications précédentes, dans lequel deux mèches de carbone sont superposées avant poudrage ou deux rubans de carbone sont superposés après poudrage lorsque le polymère est fondu ou ramolli.

**23.** Procédé selon l'une quelconque des revendications précédentes, dans lequel le taux massique de polymère est d'environ 25 ou 30 % à environ 75 %, notamment entre environ 25 ou 30% et environ 50%, plus particulièrement entre environ 30% et environ 40%.

**24.** Ruban continu imprégné ou consolidé constitué de fibres de matériau inorganique unidirectionnelles, de préférence en carbone, et d'une matrice de polymère thermoplastique, ledit ruban étant produit en grande longueur d'un seul tenant, sans découpe et sans épissure et étant revêtu et/ou imprégné à cœur d'un polymère thermoplastique, comprenant un taux de polymère compris entre environ 30% et environ 75%, notamment entre environ 30% et environ 50% et plus particulièrement entre environ 30% et environ 40%, par rapport au poids du ruban, et ayant une largeur constante notamment comprise entre environ 2 mm et environ 75 mm et plus particulièrement entre environ 5 mm et environ 10 mm, avec un écart-type compris entre 0,02 et 0,15 mm, de préférence entre 0,02 et 0,05 mm, sur une longueur d'un seul tenant supérieure ou égale à 100, 500, 1000 ou 5000 m.

**25.** Ruban selon la revendication 24, **caractérisé en ce qu'**il a une largeur moyenne d'environ 6,35 mm avec un écart-type compris entre 0,02 et 0,05 mm, de préférence sur une longueur d'un seul tenant supérieure ou égale à 100, 500, 1000 ou 5000 m.

**26.** Ruban selon la revendication 24 ou 25, **caractérisé en ce que** le ruban a un taux d'imprégnation par le polymère thermoplastique d'environ 70% à environ 100% et préférentiellement d'environ 90 à environ 98%.

**27.** Ruban continu formé de fibres de matériau inorganique unidirectionnelles, de préférence en carbone, imprégné d'un polymère thermoplastique, comprenant un taux de polymère compris entre environ 25% et environ 75%, notamment entre environ 25% et environ 50% et plus particulièrement entre environ 30% et environ 40%, par rapport au poids du ruban, comprenant à son intérieur des filaments qui ne sont pas pris dans le polymère de préférence à hauteur de 20, 25 ou 30 à environ 50 % du total des filaments du ruban et le polymère forme une gaine continue extérieure.

**28.** Ruban selon la revendication 27, **caractérisé en ce que** le ruban a un taux d'imprégnation par le polymère thermoplastique d'environ 30% à environ 70% et préférentiellement d'environ 40% à environ 60%.

**29.** Ruban selon l'une quelconque des revendications 24, 25, 27 et 28, **caractérisé en ce que** la rigidité Taber du ruban avec le calibre n°1, une masse de 250 UT et un angle de 7,5° est comprise entre environ 5 TSU et environ 25 TSU, de préférence entre environ 10 TSU et environ 20 TSU, conformément à la norme NF ISO 2493-2 (Partie 2 : Testeur Taber).

**30.** Ruban selon la revendication 24 ou 25, **caractérisé en ce que** de 80 % à 99, 98, 97, 96, 95 ou 90% des filaments sont pris dans le polymère et gainés par celui-ci.

**31.** Ruban selon l'une quelconque des revendications 24, 25, 26 et 30, **caractérisé en ce que** la rigidité Taber du ruban avec le calibre n°1, une masse de 250 UT et un angle de 7,5° est comprise entre environ 45 TSU et environ 65 TSU, de préférence entre environ 50 TSU et environ 60 TSU, conformément à la norme NF ISO 2493-2 (Partie 2 : Testeur Taber).

32. Ruban selon l'une quelconque des revendications 24 à 31, **caractérisé en ce que** le polymère thermoplastique a un point de fusion ou une température de transformation supérieur ou égal à 280°C.

33. Ruban selon la revendication précédente, dans lequel le polymère thermoplastique est choisi parmi PEEK, PPS, PEKK, PEI, ou un mélange d'au moins deux d'entre eux.

34. Pièce composite consolidée, comportant un ruban selon l'une quelconque des revendications 24 à 33 ou produit par le procédé selon l'une quelconque des revendications 1 à 23.

35. Installation permettant de mettre en œuvre le procédé selon l'une des revendications 1 à 24 ou pour produire un ruban selon l'une des revendications 24 à 33, **caractérisée en ce qu'**elle comprend :

    a) au moins une broche porte bobine avec frein.
    b) un dispositif (3, 4) de dé-trancannage et d'alignement du fil dans l'axe machine
    c) éventuellement un dispositif (5, 6) d'étalement transverse,
    d) un dispositif (7) de calibration en largeur,
    e) éventuellement un dispositif (8) de pincement et de traction,
    f) éventuellement un dispositif (9) de mesure de la largeur de la mèche,
    g) au moins une pièce métallique (10, 11) mise à la masse,
    h) au moins un poudreur électrostatique (12),
    i) au moins un four (14),
    j) éventuellement, un dispositif d'alignement du ruban pour le faire coïncider avec l'axe machine,
    k) éventuellement, une calandre (15),
    l) un dispositif (16) de calibration dans le sens transverse et en épaisseur,
    m) éventuellement, un dispositif (17) de mesure de la largeur du ruban,
    n) au moins une broche porte bobine de stockage.

36. Installation selon la revendication 32, **caractérisée en ce que** le poudreur comporte un fluidiseur à sec et un ou plusieurs pistolets ou buses de poudrage électrostatique utilisant le principe de décharge corona.

**Patentansprüche**

1. Verfahren zur Herstellung eines Bandes aus Verstärkungsfasern, das mit einer thermoplastischen Polymermatrix imprägniert ist, wobei das Band über seine gesamte Länge eine konstante Breite aufweist, wobei die Fasern in einer Richtung parallel zur Länge des Bandes verlaufen, ausgehend von einem Bündel von Fasern, das von einer Vorratsspule abgewickelt wird, wobei das Verfahren die folgenden Schritte von einer Faserbündel-Vorratsspule (1) bis zu einer Aufnahmespule (21) für das imprägnierte und verfestigte Band umfasst:

    a) Steuerung der Spannung zwischen der Vorratsspule und der Aufnahmespule,
    b) Führung des Bündels derart, dass ein Bündel erhalten wird, das sich translatorisch auf einer Linie bewegt, die mit einer als Maschinenachse bezeichneten Längsachse zusammenfällt, die sich bis in die Nähe der Aufnahmespule erstreckt,
    c) gegebenenfalls Ausbreiten des Bündels in Querrichtung bis zu einer vorgegebenen Breite, die größer als die Nominalbreite des Bandes ist,
    d) Steuerung der Breite des Bündels,
    e) gegebenenfalls Ziehen des Bündels, vorzugsweise durch Zupfen oder Foulardierung,
    f) Erden des Bündels,
    g) Aufbringen des Polymers in Pulverform auf das Bündel, durch elektrostatische Pulverbeschichtung mit einem Polymer-Massenverhältnis von etwa 20 % bis etwa 75 %, Erhalten eines imprägnierten Bandes,
    h) Schmelzen oder Erweichen des Polymers,
    i) Kalibrierung der Breite und Dicke des Bandes,
    j) gegebenenfalls Messung der Breite des Bandes,
    k) Aufwickeln des Bandes auf die Aufnahmespule.

2. Verfahren nach Anspruch 1, bei dem die elektrostatische Pulverbeschichtung mit einem Polymerpulver durchgeführt wird, das in Form einer Wirbelschicht gehalten und dann mittels einer oder mehrerer elektrostatischer Pulverbeschichtungspistolen aufgebracht wird.

3. Verfahren nach Anspruch 1 oder 2, bei dem im Kalibrierungsschritt i) das Band kalandriert wird und anschließend quer kalibriert wird.

4. Verfahren nach Anspruch 3, bei dem mit Hilfe eines gekühlten Kalanders (15) kalandriert wird.

5. Verfahren nach Anspruch 3 oder 4, bei dem gleichzeitig in Querrichtung und in der Dicke kalibriert wird.

6. Verfahren nach Anspruch 5, bei dem mit Hilfe wenigstens zweier entgegenwirkender Nuten oder wenigstens einer Nut und einer entgegenwirkenden, ebenen Fläche kalibriert wird.

7. Verfahren nach einem der vorhergehenden Ansprüche, bei dem auf die für das Band gewünschte Nominalbreite kalibriert wird.

8. Verfahren nach einem der vorhergehenden Ansprüche, bei dem das Ausbreiten des Bündels in Querrichtung c) auf eine vorgegebene Breite, die größer als die Nominalbreite des Bandes ist, durch Ausbreitung des Bündels bewirkt wird und anschließend das Bündel auf einen vorbestimmten Wert kalibriert wird.

9. Verfahren nach Anspruch 8, bei dem die Breite nach dem Ausbreiten etwa 1,5 bis etwa 4,5, beispielsweise etwa 2 bis etwa 3 mal der Nominalbreite des fertigen Bandes beträgt.

10. Verfahren nach Anspruch 8 oder 9, bei dem im Schritt d) die Breite des bei c) ausgebreiteten Bündels auf einen Wert zwischen der maximalen Ausbreitungsbreite und der Nominalbreite des fertigen Bandes zurückgebracht wird.

11. Verfahren nach einem beliebigen der vorhergehenden Ansprüche, das den Schritt e) des Ziehens des Bündels umfasst.

12. Verfahren nach einem beliebigen der vorhergehenden Ansprüche, bei dem die Laufgeschwindigkeit des Bündels und des Bandes zwischen etwa 5 und etwa 50 m/min; insbesondere zwischen etwa 10 und etwa 40 m/min, typischerweise zwischen etwa 15 und etwa 35 m/min liegt.

13. Verfahren nach einem beliebigen der vorhergehenden Ansprüche, bei dem stromaufwärts zum Schmelzen h) das Band ausgerichtet wird, damit es mit der Maschinenachse und mit der Kalibriervorrichtung von i) übereinstimmt.

14. Verfahren nach einem beliebigen der Ansprüche 3 bis 6, bei dem die Kalandrierung beim Kalibrierschritt i) bei einer Temperatur zwischen der Glasübergangstemperatur und dem Schmelzpunkt des teilkristallinen Polymers liegt.

15. Verfahren nach einem beliebigen der Ansprüche 3 bis 6, bei dem der Kalandrierungsdruck kleiner als 1 bar ist, typischerweise zwischen etwa 0,1 und etwa 0,9 bar, insbesondere zwischen 0,1 und etwa 0,6 bar liegt.

16. Verfahren nach einem beliebigen der Ansprüche 3 bis 6, bei dem der Kalandrierungsdruck größer als oder gleich 1 bar, typischerweise zwischen etwa 1 und etwa 4 bar liegt.

17. Verfahren nach einem beliebigen der vorhergehenden Ansprüche, bei dem das bei Schritt g) aufgebrachte Polymer ein thermoplastisches Polymer mit einem Schmelzpunkt oder einer Umwandlungstemperatur größer als oder gleich 280°C ist.

18. Verfahren nach dem vorherigen Anspruch, bei dem das thermoplastische Polymer ausgewählt ist aus PEEK, PPS, PEKK, PEI oder einer Mischung von mindestens zwei derselben ausgewählt ist.

19. Verfahren nach einem beliebigen der vorhergehenden Ansprüche, bei dem das Aufwickeln bei Schritt k) spannungsgeführt oder geschwindigkeitsgeführt durchgeführt wird.

20. Verfahren nach einem beliebigen der vorhergehenden Ansprüche, bei dem die Verstärkungsfasern, die das Band bilden, aus Kohlenstoff bestehen.

21. Verfahren nach einem beliebigen der vorhergehenden Ansprüche, bei dem ein Band aus einem einzigen Bündel oder aus zwei Bündeln oder mehr hergestellt wird.

22. Verfahren nach einem der vorhergehenden Ansprüche, bei dem zwei Kohlenstoffbündel vor der Pulverbeschichtung übereinandergelegt werden oder zwei Kohlenstoffbündel nach der Pulverbeschichtung, wenn das Polymer geschmolzen oder erweicht ist, übereinandergelegt werden.

23. Verfahren nach einem beliebigen der vorhergehenden Ansprüche, bei dem das Massenverhältnis des Polymers von etwa 25 oder 30 % bis etwa 75 %, insbesondere von etwa 25 oder 30 % bis etwa 50 % und ganz besonders von etwa 30 % bis etwa 40 % ist.

24. Imprägniertes oder verfestigtes kontinuierliches Band aus unidirektionalen Fasern eines anorganischen Materials, vorzugsweise Kohlenstoff, und einer thermoplastischen Polymermatrix, wobei das Band mit großer Länge aus einem einzigen Teil ohne Teilung oder Spleißung hergestellt ist und mit einem thermoplastischen Polymer kernbeschichtet und/oder -imprägniert ist, ein Polymergehalt von etwa 30 % bis etwa 75 %, insbesondere von etwa 30 % bis etwa 50 % und ganz besonders von etwa 30 % bis etwa 40 %, bezogen auf das Gewicht des Bandes umfasst, und eine konstanten Breite, insbesondere von etwa 2 mm bis etwa 75 mm und ganz besonders von etwa 5 mm bis etwa 10 mm, mit einer Standardabweichung von 0,02 bis 0,15 mm, vorzugsweise von 0,02 bis 0,05 mm, über eine Länge eines einzigen Teils größer oder gleich 100, 500, 1000 oder 5000 m aufweist.

25. Band nach Anspruch 24, **dadurch gekennzeichnet, dass** es eine mittlere Breite von etwa 6,35 mm mit einer Standardabweichung von 0,02 bis 0,05 mm, vorzugsweise über eine Länge eines einzigen Teils größer oder gleich 100, 500, 1000 oder 5000 m.

26. Band nach Anspruch 24 oder 25, **dadurch gekennzeichnet, dass** das Band durch das thermoplastische Polymer einen Imprägnierungsanteil vom etwa 70 % bis etwa 100 % und vorzugsweise von etwa 90 % bis etwa 98 % aufweist.

27. Kontinuierliches Band aus unidirektionalen Fasern eines anorganischen Materials, vorzugsweise Kohlenstoff, das mit einem thermoplastischen Polymer imprägniert ist, ein Polymergehalt von etwa 25 % bis etwa 75 %, insbesondere von etwa 25 % bis etwa 50 % und ganz besonders etwa von 30 % bis etwa 40 %, bezogen auf das Gewicht des Bandes umfasst, in seinem Inneren Fasern umfasst, die nicht im Polymer berücksichtigt sind, vorzugsweise in Höhe von 20, 25 oder 30 bis etwa 50 % der gesamten Fasern des Bandes umfasst und das Polymer eine durchgängige Außenhülle bildet.

28. Band nach Anspruch 27, **dadurch gekennzeichnet, dass** das Band durch das thermoplastische Polymer einen Imprägnierungsanteil vom etwa 30 % bis etwa 70 % und vorzugsweise von etwa 40 % bis etwa 60 % aufweist.

29. Band nach einem beliebigen der Ansprüche 24, 25, 27 und 28, **dadurch gekennzeichnet, dass** die Taber-Steifigkeit des Bandes mit Kaliber Nr. 1, einer Masse von 250 UT und einem Winkel von 7,5 ° gemäß der Norm NF ISO 2493-2 (Teil 2: Taber-Tester) zwischen etwa 5 TSU und etwa 25 TSU, vorzugsweise zwischen etwa 10 TSU und etwa 20 TSU liegt.

30. Band nach Anspruch 24 oder 25, **dadurch gekennzeichnet, dass** 80 % bis 99, 98, 97, 96, 95 oder 90 % der Fasern in dem Polymer aufgenommen und von diesem umhüllt sind.

31. Band nach einem der Ansprüche 24, 25, 26 und 30, **dadurch gekennzeichnet, dass** die Taber-Steifigkeit des Bandes mit Kaliber Nr. 1, einer Masse von 250 UT und einem Winkel von 7,5 ° gemäß der Norm NF ISO 2493-2 (Teil 2: Taber-Tester) zwischen etwa 45 TSU und etwa 65 TSU, vorzugsweise zwischen etwa 50 TSU und etwa 60 TSU liegt.

32. Band nach einem beliebigen der Ansprüche 24 bis 31, **dadurch gekennzeichnet, dass** das thermoplastische Polymer einen Schmelzpunkt oder eine Umwandlungstemperatur größer als oder gleich 280°C aufweist.

33. Band nach dem vorherigen Anspruch, bei dem das thermoplastische Polymer ausgewählt ist aus PEEK, PPS, PEKK, PEI oder einer Mischung von mindestens zwei derselben ausgewählt ist.

34. Verfestigtes Verbundteil, das ein Band nach einem beliebigen der Ansprüche 24 bis 33 aufweist oder durch das Verfahren nach einem beliebigen der Ansprüche 1 bis 23 hergestellt ist.

35. Anlage zur Durchführung des Verfahrens nach einem der Ansprüche 1 bis 24 oder zur Herstellung eines Bandes nach einem der Ansprüche 24 bis 33, **dadurch gekennzeichnet, dass** sie umfasst:

a) wenigstens einen Spulenhalter mit Bremse,

b) eine Vorrichtung (3, 4) zum Abspulen und zum Ausrichten des Fadens in der Maschinenachse,

c) gegebenenfalls eine Vorrichtung (5, 6) zum Ausbreiten in Querrichtung,

d) eine Vorrichtung (7) zur Kalibrierung in der Breite,

e) gegebenenfalls eine Vorrichtung (8) zum Zupfen und Ziehen,

f) gegebenenfalls eine Vorrichtung (9) zum Messen der Breite des Bündels,

g) wenigstens ein geerdetes metallisches Werkstück (10, 11),

h) wenigstens einen elektrostatischen Pulverbeschichter (12),

i) wenigstens einen Ofen (14),

j) gegebenenfalls eine Vorrichtung zum Ausrichten des Bandes, damit dieses mit der Maschinenachse zusammenfällt,

k) gegebenenfalls einen Kalander (15),

l) eine Vorrichtung (16) zur Kalibrierung in Querrichtung und in der Dicke,

m) gegebenenfalls eine Vorrichtung (17) zum Messen der Breite des Bandes,

n) wenigstens einen Aufnahmespulenhalter.

**36.** Anlage nach Anspruch 32, **dadurch gekennzeichnet, dass** der Pulverbeschichter eine Trocken-Fluidisiervorrichtung und eine oder mehrere elektrostatische Pulverbeschichtungspistolen oder -düsen umfasst, die das Prinzip der Koronaentladung nutzen.

**Claims**

**1.** A method for manufacturing a tape from reinforcement filaments impregnated with a thermoplastic polymer matrix, a tape which has a constant width over the whole of its length, wherein the filaments extend along a direction parallel to the length of the tape, from a strand of filaments stemming from a supply coil, the method comprising the following steps, from a coil (1) for supplying strand up to a coil (21) for storing the impregnated and consolidated tape:

a) managing the tension between the supply coil and the storage coil,

b) guiding the strand so as to obtain a strand moving in translation over a line coinciding with a longitudinal axis, a so called machine axis, extending as far as the proximity of the storage coil,

c) optionally transverse spreading of the strand to a predetermined width greater than the rated width of the tape,

d) managing the width of the strand,

e) optionally pulling the strand, preferably by pinching or with a foulard,

f) grounding the strand,

g) deposition of the polymer as a powder on the strand, by electrostatic powder coating, with a mass polymer level of about 20% to about 75%, obtaining an impregnated tape,

h) melting or softening the polymer,

i) calibration in width and in thickness of the tape,

j) optionally measuring the width of the tape,

k) winding the tape on the storage coil.

**2.** The method according to claim 1, wherein the electrostatic powder coating is carried out with a polymer powder maintained as a fluidized bed, and then deposited by means of one or several electrostatic powdering guns.

**3.** The method according to claim 1 or 2, wherein in the calibration step i), the tape is calendered, and then calibrated transversely.

**4.** The method according to claim 3, wherein one proceeds with calendering with a cooled calender (15).

**5.** The method according to claim 3 or 4, wherein calibration is performed both in the transverse direction and in thickness.

**6.** The method according to claim 5, wherein the calibration is performed by means of at least two antagonistic grooves or with at least one groove and an antagonistic planar surface.

**7.** The method according to one of the preceding claims, wherein calibration is performed to the desired rated width for the tape.

8. The method according to one of the preceding claims, wherein the transverse spreading c) of the strand is carried out to a predetermined width greater than the rated width of the tape, by spreading out of the strand, and then the strand is calibrated to a predetermined value.

9. The method according to claim 8, wherein the width value after spreading is of about 1.5 to about 4.5, for example of about 2 to about 3, the rated width of the final tape.

10. The method according to claim 8 or 9, wherein at step d) the width of the strand spreaded at step c) is reduced to a value comprised between the maximum spreading out width and the rated width of the final tape.

11. The method according to any one of the preceding claims, comprising step e) of pulling the strand.

12. The method according to any one of the preceding claims, wherein the running rate of the strand and of the tape is comprised between about 5 and about 50 m/min, in particular between about 10 and about 40 m/min, typically between about 15 and about 35 m/min.

13. The method according to any one of the preceding claims, wherein upstream from the melting h), an alignment of the tape is made in order to have it coincide with the machine axis and with the calibration device of i).

14. The method according to any one of claims 3 to 6, wherein the calendering at calibration step i) is carried out at a temperature comprised between the glassy transition temperature and the melting point of the semi-crystalline polymer.

15. The method according to any one of claims 3 to 6, wherein the calendering pressure is below 1 bar, typically comprised between about 0.1 and about 0.9 bar, in particular between about 0.1 and about 0.6 bar.

16. The method according to any one of claims 3 to 6, wherein the calendering pressure is above or equal to 1 bar, typically comprised between about 1 and about 4 bar.

17. The method according to any one of the preceding claims, wherein the thermoplastic polymer is a thermoplastic polymer having a melting point or a transformation temperature greater than or equal to 280°C.

18. The method according to the preceding claim, wherein said thermoplastic polymer is chosen from PEEK, PEKK, PPS, PEI, and a mixture of at least two of them.

19. The method according to any one of the preceding claims, wherein winding the tape at step k) is made in tension or in velocity.

20. The method according to any one of the preceding claims, wherein the reinforcement filaments forming the tape are in carbon.

21. The method according to any one of the preceding claims, wherein a tape is made from a single strand or from 2 or more strands.

22. The method according to one of the preceding claims, wherein two carbon strands are superimposed before powdering or two carbon tapes are superimposed after powdering with the polymer being molten or soften.

23. The method according to any one of the preceding claims, wherein the mass polymer level is of about 25 or 30% to about 75%, in particular of about 25 or 30% to about 50%, more particularly of about 30% to about 40%.

24. A continuous tape impregnated or consolidated constituted of unidirectional fibers of an inorganic material, preferably in carbon, and of a thermoplastic polymer matrix, said tape being produced with a great length in a single piece, without any cutting out and without any splices, and being coated and/or impregnated to the core of a thermoplastic polymer, comprising a polymer level comprised between about 30% and about 75%, notably between about 30% and about 50% and more particularly between about 30% and about 40%, based on the weight of the tape, and having a constant width notably comprised between about 2 mm and about 75 mm and more particularly between about 5 mm and about 10 mm, with a standard deviation comprised between 0.02 and 0.15 mm, preferably between 0.02 and 0.05 mm, over a length in a single piece greater than or equal to 100, 500, 1,000 or 5,000 m.

**25.** The tape according to claim 24, **characterized in that** it has an average width of about 6.35 mm with a standard deviation comprised between 0.02 and 0.05 mm, preferably over a length of a single piece greater than or equal to 100, 500, 1,000 or 5,000 m.

**26.** The tape according to claim 24 or 25, **characterized in that** the tape has an impregnation level with the thermoplastic polymer of between about 70% and about 100%, and preferably of between about 90% and about 98%.

**27.** A continuous tape formed with unidirectional fibers of an inorganic material, preferably in carbon, impregnated with a thermoplastic polymer, comprising a polymer level comprised between about 25% and about 75%, notably between about 25% and about 50% and more particularly between about 30% and about 40%, based on the weight of the tape, comprising inside filaments which are not taken in the polymer preferably in an amount of 20, 25 or 30 to about 50 % of the total of the filaments of the tape and the polymer forms an outer continuous sheath.

**28.** The tape according to claim 27, **characterized in that** it the tape has an impregnation level with the thermoplastic polymer of between about 30% and about 70%, and preferably of between about 40% and about 60%.

**29.** The tape according to any of claims 24, 25, 27 and 28, **characterized in that** the Taber rigidity of the tape with caliber no. 1, a mass of 250 TU and an angle of 7.5° is comprised between about 5 TSU and about 25 TSU, preferably between about 10 TSU and about 20 TSU, according to the NF ISO 2493-2 standard (Part 2: Taber Tester).

**30.** The tape according to claim 24 or 25, **characterized in that** from 80% to 99, 98, 97, 96, 95 or 90% of the filaments are taken in the polymer and sheathed by the latter.

**31.** The tape according to any of claims 24, 25, 26 and 30, **characterized in that** the Taber rigidity of the tape with the caliber no. 1, a mass of 250 TU and an angle of 7.5° is comprised between about 45 TSU and about 65 TSU, preferably between about 50 TSU and about 60 TSU, compliant with the NF ISO 2493-2 standard (Part 2: Taber Tester).

**32.** The tape according to any of claims 24 to 31, **characterized in that** the thermoplastic polymer is a thermoplastic polymer having a melting point or a transformation temperature greater than or equal to 280°C

**33.** The tape according to the preceding claim, **characterized in that** said thermoplastic polymer is chosen from PEEK, PEKK, PPS, PEI, and a mixture of at least two of them.

**34.** A consolidated composite part, comprising a tape according to any of claims 24 to 33 or produced by the method according to any of claims 1 to 23.

**35.** A facility giving the possibility of applying the method according to one of claims 1 to 23 or for producing a tape according to one of claims 24 to 33, **characterized in that** it comprises:

    a) at least one coil-holder pin with a brake.
    b) a device (3, 4) for unwinding and for aligning the thread in the machine axis.
    c) optionally a transverse spreading device (5, 6),
    d) a device (7) for calibration in width,
    e) optionally a pinching and pulling device (8),
    f) optionally a device (9) for measuring the width of the strand,
    g) at least one metal part (10,11) grounded,
    h) at least one electrostatic powder coating device (12),
    i) at least one oven (14),
    j) optionally, a device for aligning the tape to have it coincide with the machine axis,
    k) optionally, a calender (15),
    l) a calibration device (16) in the transverse direction and in thickness,
    m) optionally, a device (17) for measuring the width of the tape,
    n) at least one storage coil-holder pin.

**36.** The facility according to claim 35, **characterized in that** the powder coating device includes a dry fluidizer and one or several guns or nozzles for electrostatic powder coating using the principle of corona discharge.

*Fig.1*

EP 3 209 473 B1

*Fig.2*

*Fig.3*

*Fig.4*

*Fig.5*

0 500 μm

101

101

102

103 103

102

*Fig.6*

0 500 μm

104 105

105

*Fig.7*

0 500 μm

106

107

106

107

*Fig.8*

*Fig.9*

Fig.10

## RÉFÉRENCES CITÉES DANS LA DESCRIPTION

**Documents brevets cités dans la description**

- EP 1007309 A
- FR 2939069
- JP H09136976 B
- JP 2004090352 B

**Littérature non-brevet citée dans la description**

- ASM Handbook. ASM International, 2001